# EUROPÄISCHE PATENTSCHRIFT

(11) **EP 3 864 125 B1**
(45) Veröffentlichungstag und Bekanntmachung des Hinweises auf die Patenterteilung: **16.11.2022**
(21) Anmeldenummer: 19732321.5
(22) Anmeldetag: 18.06.2019
(51) Int. Cl.: C11D 17/04, C11D 3/16

(54) **MEHRKOMPONENTEN-WASCHMITTEL MIT CATECHOL-METALLKOMPLEX**
MULTI-COMPONENT DETERGENT COMPRISING A CATECHOL METAL COMPLEX
DÉTERGENT À PLUSIEURS COMPOSANTS, À COMPLEXE MÉTALLIQUE-CATÉCHINE

(30) Priorität: 11.10.2018 DE 102018217392
(43) Veröffentlichungstag der Anmeldung: 18.08.2021
(73) Patentinhaber: Henkel AG & Co. KGaA, 40589 Düsseldorf (DE)
(72) Erfinder: MEIER, Frank, 40589 Düsseldorf (DE); JOB, Mareile, 51375 Leverkusen (DE); KROPF, Christian, 40724 Hilden (DE); PEGELOW, Ulrich, 40597 Düsseldorf (DE)
(86) Internationale Anmeldenummer: PCT/EP2019/065989
(87) Internationale Veröffentlichungsnummer: WO 2020/074143

(56) Entgegenhaltungen:
- DE-A1-102014 222 833
- US-A1- 2009 176 684
- US-A1- 2018 016 527

## Beschreibung

Die vorliegende Erfindung betrifft ein Mehrkomponenten-Waschmittel, das eine erste flüssige Komponente K1 umfasst, die mindestens eine Catecholverbindung enthält, und eine zweite flüssige Komponente K2 umfasst, die mindestens ein Tensid enthält. Ferner betrifft die vorliegende Erfindung die Verwendung des Mehrkomponenten-Waschmittels zum Entfernen von bleichbaren Anschmutzungen sowie ein Verfahren zum Waschen von Textilien unter Verwenden des Mehrkomponenten-Waschmittels.

Während die Formulierung pulverförmiger, Bleichmittel enthaltender Wasch- und Reinigungsmittel heute keinerlei Probleme mehr bereitet, stellt die Formulierung stabiler flüssiger, Bleichmittel enthaltender Wasch- und Reinigungsmittel nach wie vor ein Problem dar. Aufgrund des üblicherweise Fehlens des Bleichmittels in flüssigen Wasch- und Reinigungsmitteln werden solche Anschmutzungen, die normalerweise insbesondere aufgrund der enthaltenen Bleichmittel entfernt werden, entsprechend häufig nur in unzureichender Weise entfernt. Ein ähnliches Problem besteht auch für Bleichmittel-freie Color-Waschmittel, bei denen das Bleichmittel weggelassen wird, um die Farbstoffe im Textil zu schonen und deren Ausbleichen zu verhindern. Bei fehlendem Bleichmittel kommt erschwerend hinzu, dass anstatt der Entfernung der sogenannten bleichbaren Anschmutzungen, die normalerweise durch den Einsatz von Bleichmittel auf Persauerstoffbasis wenigstens anteilsweise entfernt werden, aufgrund des Waschvorgangs häufig im Gegenteil sogar eine Intensivierung und/oder Verschlechterung der Entfernbarkeit der Anschmutzung herbeigeführt wird, was nicht zuletzt auf initiierte chemische Reaktionen zurückzuführen sein dürfte, die beispielsweise in der Polymerisierung bestimmter in den Anschmutzungen enthaltener Farbstoffe bestehen können.

Derartige Probleme treten insbesondere bei Anschmutzungen auf, die polymerisierbare Substanzen enthalten. Bei den polymerisierbaren Substanzen handelt es sich vor allem um polyphenolische Farbstoffe, vorzugsweise um Flavonoide, insbesondere aus der Klasse der Anthocyanidine oder Anthocyane. Die Anschmutzungen können insbesondere durch Lebensmittelprodukte oder Getränke verursacht worden sein, die entsprechende Farbstoffe enthalten. Bei den Anschmutzungen kann es sich insbesondere um Flecken von Früchten oder Gemüse oder auch Rotweinflecken handeln, die insbesondere polyphenolische Farbstoffe, vor allem solche aus der Klasse der Anthocyanidine oder Anthocyane, enthalten.

Aus der internationalen Patentanmeldung WO 2011/023716 A1 ist die Verwendung von Gallussäureestern wie Propylgallat in Wasch- und Reinigungsmitteln zur verbesserten Entfernung von Anschmutzungen, die polymerisierbare Substanzen enthalten, bekannt.

Die Anmeldung US 2018/016527 A1 offenbart eine wässrige Zusammensetzung, umfassend ein Pigment oder Farbstoff und einen Chelatbildner sowie wasserlösliche Mehrkomponentenbeutel enthaltend eine solche flüssige Zubereitung.

Reinigungsmittelzusammensetzungen enthaltend 1,2-Dihydroxybenzol-3,5-disulfonsäure (Tiron) und einen Liganden, der Fe³⁺-Ionen chelatieren kann, wobei der entstandene Komplex keine rötliche Färbung aufweist, werden in US 2009/176684 A1 offenbart.

Die internationale Patentanmeldung WO 2013/092263 A1 betrifft die Verbesserung der Leistung von Wasch- und Reinigungsmitteln durch den Einsatz von Oligohydroxybenzoesäureamiden.

Die deutschen Patentanmeldungen DE 102016214660 A1 und DE 102014222833 betreffen die Verwendung von Dihydroxyterephthalsäurederivaten in Wasch- und Reinigungsmitteln zur Verbesserung der Wasch- oder Reinigungsleistung. Die Wasch- und Reinigungsmittel dieser Veröffentlichungen weisen einen alkalischen pH-Wert auf.

Die Ästhetik spielt bei Flüssigwaschmitteln, insbesondere in durchsichtigen oder transluzenten Flaschen oder bei vorportionierten Produkten wie Pouches, eine wichtige Rolle. Insbesondere Produkte mit intensiven und kräftigen Farben sind vom Verbraucher gewünscht. Ein Risiko bei der Verwendung neuer Farbstoffe und/oder hoher Einsatzmengen von Farbstoffen besteht darin, dass diese Farbstoffe während des Waschprozesses auf das Textil aufziehen und es zu einer lokalen oder einheitlichen Verfärbung kommt. Der Effekt ist in Labortests mit der "Anfärbeneigung" messbar und ist auch für den Konsumenten visuell wahrnehmbar. Das gewaschene Kleidungsstück ist unter Umständen irreversibel geschädigt und die Verfärbung lässt sich auch mit erneutem Waschen nicht mehr entfernen.

Werden die Komponenten eines Mehrkomponenten-Waschmittels getrennt voneinander in verschiedenen Kammern eines wasserlöslichen Behälters eingeschlossen, ist es ebenso von Vorteil, wenn die Farbe der Komponenten nicht auf die Umhüllung übergeht und diese an der Kontaktstelle einfärbt oder gar durch das Material der Umhüllung in eine andere Kammer migriert und die darin befindliche Zusammensetzung verfärbt.

Die Aufgabe der vorliegenden Erfindung war es deshalb ein Mehrkomponenten-Waschmittel bereitzustellen, dass bei Lagerung eine intensive Farbe aufweist und farbstabil ist, jedoch das Textil im Waschprozess nicht verfärbt.

Die Erfinder der vorliegenden Erfindung haben überraschend gefunden, dass diese Aufgabe durch die Verwendung spezieller Catechol-Metallkomplexverbindungen als Farbstoff möglich ist. Die Verwendung spezieller Catechol-Metallkomplexverbindungen reduziert das Risiko der unerwünschten Textilanfärbung, da besagte Komplexverbindungen eine sehr geringe Affinität für natürliche und synthetische Gewebe aufweisen. Zudem werden wasserlösliche Materialien des Behälters durch diese neuen Farbstoffe nicht eingefärbt. Eine Migration des Farbstoffes wird unterbunden.

Zudem zeigen Mehrkomponenten-Waschmittel mit den erfindungsgemäßen Catechol-Metallkomplexverbindungen in Gegenwart eines Überschusses an freiem Catecholliganden eine gute Bleichwirkung. Die Waschmittel sind besonders vorteilhaft in ihrer Reinigungswirkung gegenüber Anschmutzungen, die nur durch Bleichen entfernt werden können. Bei diesen Anschmutzungen handelt es sich um solche, die polymerisierbare Substanzen enthalten. Bei den polymerisierbaren Substanzen handelt es sich vor allem um polyphenolische Farbstoffe, vorzugsweise um Flavonoide, insbesondere aus der Klasse der Anthocyanidine oder Anthocyane. Die Anschmutzungen können insbesondere durch Lebensmittelprodukte oder Getränke verursacht worden sein, die entsprechende Farbstoffe enthalten. Bei den Anschmutzungen kann es sich insbesondere um Flecken von Früchten oder Gemüse oder auch Rotweinflecken handeln, die insbesondere polyphenolische Farbstoffe, vor allem solche aus der Klasse der Anthocyanidine oder Anthocyane, enthalten.

Ein erster Gegenstand der vorliegenden Erfindung ist daher ein Mehrkomponenten-Waschmittel umfassend mindestens zwei Komponenten, welches in einem Behälter mit mindestens zwei Kammern enthalten ist, wobei
eine erste Komponente K1 eine erste flüssige Zusammensetzung ist, enthaltend
- mindestens eine Catechol-Metallkomplexverbindung der Formel (I) 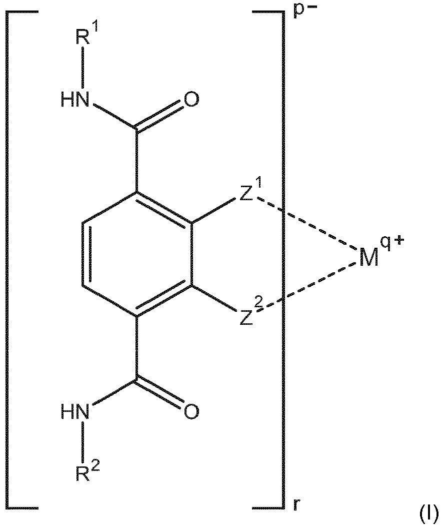 wobei
   - R¹ und R²: unabhängig voneinander für einen Kohlenwasserstoffrest mit 1 bis 20 Kohlenstoffatomen stehen, der gegebenenfalls mit mindestens einem Rest substituiert ist, ausgewählt aus Hydroxy, (C₁-C₄)-Alkoxy, (C₁-C₄)-Alkoxy(CH₂CH₂O)ₙ-, -NR'R" oder -N⁺R'R"R‴X⁻, wobei n = 1 bis 10, R', R" und R‴ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen,
   - Z¹ und Z²: unabhängig voneinander für OH oder O⁻ stehen,
   - M: steht für ein Metallkation eines Übergangsmetalls oder Lanthanoids, (insbesondere für ein Metallkation aus Ti, Zr, Hf, V, Nb, Ta, Cr. Mo, W, Mn, Fe, Ru, Co, Ni, Cu, Zn, Ce oder Sm),
   - q: als Ladungszahl des Metallkations M für eine Zahl 2, 3 oder 4 steht,
   - p: als Ladungszahl des Catecholliganden für eine Zahl 0, 1 oder 2 steht,
   - r: für eine Zahl 1, 2, 3 oder 4 steht, und
- mindestens eine freie Catecholverbindung der Formel (II) oder deren Salz 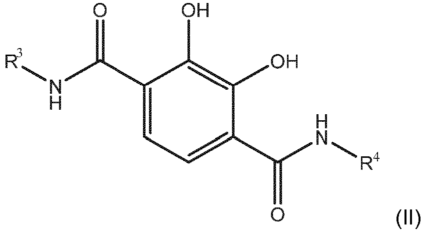 wobei
   - R³ und R⁴: unabhängig voneinander für einen Kohlenwasserstoffrest mit 1 bis 20 Kohlenstoffatomen stehen, der gegebenenfalls mit mindestens einem Rest substituiert ist, ausgewählt aus Hydroxy, (C₁-C₄)-Alkoxy, (C₁-C₄)-Alkoxy(CH₂CH₂O)ₙ-, -NR'R" oder -N⁺R'R"R‴X⁻, wobei n = 1 bis 10, R', R" und R‴ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen,
   mit der Maßgabe, dass die Catecholverbindung der Formel (II) und deren Salz von Verbindungen der Formel (I) verschieden sind,
   und eine zweite Komponente K2 eine zweite flüssige Zusammensetzung ist, enthaltend mindestens ein Tensid.

Der Wassergehalt wie hierin definiert bezieht sich auf den mittels der Karl Fischer Titration ermittelten Wassergehalt (Angewandte Chemie 1935, 48, 394-396; ISBN 3-540-12846-8 Eugen Scholz).

"Flüssig", wie hierin in Bezug auf erfindungsgemäße Zusammensetzungen verwendet, schließt alle bei Standardbedingungen (20 °C, 1013 mbar) fließfähigen Zusammensetzungen ein und erfasst insbesondere auch Gele und pastöse Zusammensetzungen. Insbesondere schließt der Begriff auch Nicht-Newtonsche Flüssigkeiten, die eine Fließgrenze besitzen, ein.

Alle im Zusammenhang mit den hierin beschriebenen Bestandteilen des Waschmittels angegeben Mengenangaben beziehen sich, sofern nichts anderes angegeben ist, auf Gew.% jeweils bezogen auf das Gesamtgewicht der Zusammensetzung. Des Weiteren beziehen sich derartige Mengenangaben, die sich auf mindestens einen Bestandteil beziehen, immer auf die Gesamtmenge dieser Art von Bestandteil, die im Waschmittel enthalten ist, sofern nicht explizit etwas anderes angegeben ist. Das heißt, dass sich derartige Mengenangaben, beispielsweise im Zusammenhang mit "mindestens einem nichtionischen Tensid", auf die Gesamtmenge von nichtionischen Tensiden die im Waschmittel enthalten ist, beziehen.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Zusammensetzungen bezieht sich diese Angabe nicht auf die absolute Menge an Molekülen sondern auf die Art des Bestandteils. "Mindestens ein nichtionisches Tensid" bedeutet daher beispielsweise ein oder mehrere verschiedene nichtionische Tenside, d.h. eine oder mehrere verschiedene Arten von nichtionischen Tensiden. Zusammen mit Mengenangaben beziehen sich die Mengenangaben auf die Gesamtmenge der entsprechend bezeichneten Art von Bestandteil, wie bereits oben definiert.

"Im Wesentlichen frei" wie hierin verwendet, bedeutet, dass die jeweilige Verbindung in weniger als 0,01 Gew.-% (i.e. 0 bis unter 0,01 Gew.-%), bevorzugt weniger als 0,001 Gew.-% (i.e. 0 bis unter 0,001 Gew.-%), stärker bevorzugt weniger als 0,0001 Gew.-% (i.e. 0 bis unter 0,0001 Gew.-%), am stärksten bevorzugt gar nicht in der jeweiligen Komponente oder Zusammensetzung enthalten ist.

Werden im Rahmen der Anmeldung Zahlenbereiche von einer Zahl bis zu einer anderen Zahl definiert, so sind von dem Bereich die Grenzwerte mitumfasst.

Werden im Rahmen der Anmeldung Zahlenbereiche zwischen einer Zahl und einer anderen Zahl definiert, so sind von dem Bereich die Grenzwerte nicht mitumfasst.

Eine chemische Verbindung ist eine organische Verbindung, wenn das Molekül der chemischen Verbindung mindestens eine kovalente Bindung zwischen Kohlenstoff und Wasserstoff enthält. Diese Definition gilt unter anderem für "organische Bleichaktivatoren" als chemische Verbindung *mutatis mutandis.*

Eine chemische Verbindung ist im Umkehrschluss zur Definition der organischen Verbindung eine anorganische Verbindung, wenn das Molekül der chemischen Verbindung keine kovalente Bindung zwischen Kohlenstoff und Wasserstoff enthält.

Sind Verbindungen in der vorliegenden Erfindung als substituiert beschrieben, so sind die möglichen Substituenten dem Fachmann bekannt. Insbesondere bevorzugt, falls nicht explizit anders angegeben, sind die Substituenten ausgewählt aus -F, -Cl, -Br, -I, -OH, =O, -OR¹, -NH₂, -NHR¹, -NR¹₂ und -COOR¹, wobei R¹ ein Alkylrest mit 1 bis 10 Kohlenstoffatomen ist.

Gemäß der vorliegenden Erfindung liegen die Komponenten räumlich voneinander getrennt vor.

Die vorliegende Erfindung enthält mindestens zwei flüssige Komponenten K1 und K2, weitere Komponenten können auch fest sein oder als Granulat vorliegen. Bevorzugt ist, dass alle Komponenten flüssig sind. Sind weitere flüssige Komponenten vorhanden, so können diese wie K1 oder K2 definiert sein. Erfindungsgemäße Mehrkomponenten-Waschmittel sind bevorzugt dadurch gekennzeichnet, dass mindestens eine weitere Komponente enthalten ist, wobei die weiteren Komponenten jeweils definiert sind wie Komponente K2 oder eine pulverförmige Zusammensetzung oder ein Granulat sind.

Sind in der vorliegenden Erfindung Molekülmassen oder relative Molekülmassen oder Molmassen beschrieben, so handelt es sich, außer explizit anders angegeben um das zahlenmittlere Molekulargewicht M_{N}, welches mittels Gelpermeationschromatographie unter Verwendung von Polystyrolstandards bestimmt werden kann.

Als "Ligand" werden in der Komplexchemie solche Moleküle bezeichnet, die in Gegenwart eines als Zentralatom oder Zentralion fungierenden Stoffes (z.B. Metallion) unter Ausbildung eines Komplexes an diesen Stoff gebunden sind. Als "freier Ligand" oder "unkomplexierter Ligand" liegt der Ligand in nichtkomplexierter Form ungebunden ohne Gruppierung um ein Zentralatom oder Zentralion vor.

Bevorzugte Mehrkomponenten-Waschmittel enthalten im Wesentlichen nur in der Komponente K1 die Catechol-Metallkomplexverbindungen der Formel (I) und die freien Catechol-Verbindungen der Formel (II). Das bedeutet, dass bevorzugte Mehrkomponenten-Waschmittel dadurch gekennzeichnet sind, dass die zweite Komponente und die gegebenenfalls vorhandenen zusätzlichen Komponenten des Mehrkomponenten-Waschmittels im Wesentlichen frei sind von Verbindungen der Formel (I) und Verbindungen der Formel (II). Es ist besonders bevorzugt, wenn die Komponente K2 und die gegebenenfalls zusätzlich vorhandenen Komponenten des Mehrkomponenten-Waschmittels jeweils weniger als 0,001 Gew.% von Verbindungen der Formel (I) und jeweils weniger als 0,001 Gew.% von Verbindungen der Formel (II) enthalten.

Die Catechol-Metallkomplexverbindungen der Formel (I) können als Komplexkationen (q > r · p), Komplexanion (q < r · p) oder als neutraler Komplex (q = r · p) vorliegen. Im ersten Fall wird die kationische Ladung des Komplexkations durch ein entsprechendes Anion-Äquivalent unter Wahrung der Elektroneutralität kompensiert, das bevorzugt unter den bevorzugt geeigneten Anionen für X⁻ der Formel (I) ausgewählt wird (*vide infra*)*.*

Im zweiten Fall wird die anionische Ladung des Komplexkations durch ein entsprechendes Kation-Äquivalent unter Wahrung der Elektroneutralität kompensiert.

Die Reste R¹ und R² gemäß Formel (I) stehen unabhängig voneinander für einen besagten C₁-C₂₀-Kohlenwasserstoffrest. Die Kohlenwasserstoffreste mit 1 bis 20 Kohlenstoffatomen in Formel (I) können linear oder verzweigt, gesättigt oder ungesättigt, cyclisch oder alicyclisch oder aromatisch sein. Solche Reste sind bevorzugt ausgewählt aus C₁-C₂₀-Alkyl, C₁-C₂₀-Alkenyl, C₆-C₂₀-Aryl, Alkylaryl mit insgesamt 7 bis 20 Kohlenstoffatomen (z.B. Benzyl), der jeweils gegebenenfalls mit mindestens einem Rest substituiert ist, ausgewählt aus Hydroxy, (C₁-C₄)-Alkoxy, (C₁-C₄)-Alkoxy(CH₂CH₂O)ₙ-, -NR'R" oder -N⁺R'R"R‴X⁻, wobei n = 1 bis 10, R', R" und R‴ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen.

Bevorzugt geeignete Catechol-Metallkomplexverbindungen der Formel (I) sind dadurch gekennzeichnet, dass in Formel (I) die Reste R¹ und R² unabhängig voneinander für eine Alkylgruppe, eine Alkoxyalkylgruppe, eine Hydroxyalkylgruppe, eine Hydroxyalkyloxyalkyl-Gruppe, (N-Hydroxyethyl)-aminoethyl, (N-Methoxyethyl)-aminoethyl oder (N-Ethoxyethyl)-aminoethyl, oder eine aromatische Gruppe stehen.

Bevorzugte Alkylgruppen sind gemäß Formel (I) lineare (C₁-C₁₀)-Alkylgruppen oder verzweigte (C₃-C₁₀)-Alkylgruppen oder C₅-C₆-Cycloalkyl. Methyl, Ethyl, n-Propyl, Isopropyl, n-Butyl, sec-Butyl, tert-Butyl, iso-Butyl, n-pentyl, iso-Pentyl, Neopentyl, Hexyl sind besonders bevorzugte Alkylgruppen gemäß Formel (I) (äußerst bevorzugt Methyl, Ethyl, n-Propyl, iso-Propyl).

Bevorzugte Alkenylgruppen sind gemäß Formel (I) Allyl, Vinyl, Butenyl.

Bevorzugte Alkoxyalkylgruppen der Formel (I) sind Methoxyethyl, Methoxypropyl, (2-Methoxy)-ethoxyethyl, Ethoxyethyl, Ethoxypropyl oder (2-Ethoxy)-ethoxyethyl.

Bevorzugte Hydroxyalkylgruppen sind gemäß Formel (I) 2-Hydroxyethyl, 3-Hydroxypropyl, 2-Hydroxypropyl, 1,2-Dihydroxypropyl.

Bevorzugte Hydroxyalkyloxyalkyl-Gruppen gemäß Formel (I) sind 2-Hydroxyethoxyethyl. Besonders bevorzugt stehen die Reste R¹ und R² der Formel (I) unabhängig voneinander für Methyl, Ethyl, n-Propyl, Isopropyl, n-Butyl, sec-Butyl, tert-Butyl, iso-Butyl, n-pentyl, iso-Pentyl, Neopentyl, Hexyl, Allyl, Butenyl, 2-Hydroxyethyl, 2-Hydroxypropyl, 3-Hydroxypropyl, 1,2-Dihydroxypropyl, 2-Methoxyethyl, 2-Ethoxyethyl, 2-Methoxypropyl, 3-Methoxypropyl, 2-Ethoxypropyl, 3-Ethoxypropyl, 2-(N-Hydroxyethyl)-aminoethyl, 2-(N-Methoxyethyl)-aminoethyl oder 2-(N-Ethoxyethyl)-aminoethyl, Benzyl oder Phenyl.

Es hat sich als ganz besonders bevorzugt erwiesen, wenn in Formel (I) die Reste R¹ und R² gleich sind. Am bevorzugtesten stehen R¹ und R² für Methyl, Ethyl, n-Propyl, Isopropyl, n-Butyl, sec-Butyl, tert-Butyl, iso-Butyl, n-pentyl, iso-Pentyl, Neopentyl, Hexyl, 2-Hydroxyethyl, 2-Hydroxypropyl, 3-Hydroxypropyl, 2-Methoxyethyl, 2-Ethoxyethyl, 2-Methoxypropyl, 3-Methoxypropyl, 2-Ethoxypropyl, 3-Ethoxypropyl. Methyl, Ethyl, n-Propyl, iso-Propyl sind äußerst bevorzugte Gruppen für R¹ und R² der Catechol-Metallkomplexverbindungen der Formel (I).

X⁻ wird gemäß Formel (I) vorzugsweise aus der Gruppe umfassend Lactat, Citrat, Tartrat, Succinat, Perchlorat, Tetrafluoroborat, Hexafluorophosphat, Alkylsulfonat, Alkylsulfat, Hydrogensulfat, Sulfat, Dihydrogenphosphat, Hydrogenphosphat, Phosphat, Isocyanat, Rhodanid, Nitrat, Fluorid, Chlorid, Bromid, Hydrogencarbonat und Carbonat sowie Mischungen aus mindestens zweien von diesen ausgewählt, wobei der Ladungsausgleich bei Anwesenheit mehrwertiger Anionen durch die Anwesenheit entsprechend mehrerer kationischer Grundgerüste der allgemeinen Formel (I) oder gegebenenfalls durch die Anwesenheit zusätzlicher Kationen wie Natrium- oder Ammoniumionen gewährleistet werden kann.

Die gestrichelten Linien gemäß Formel (I) repräsentieren koordinative Bindungen des Liganden an das Metallkation M.

Höchst bevorzugte Catechol-Verbindungen der Formel (I) sind die Verbindungen der Formeln (I-a) und/oder (I-b). 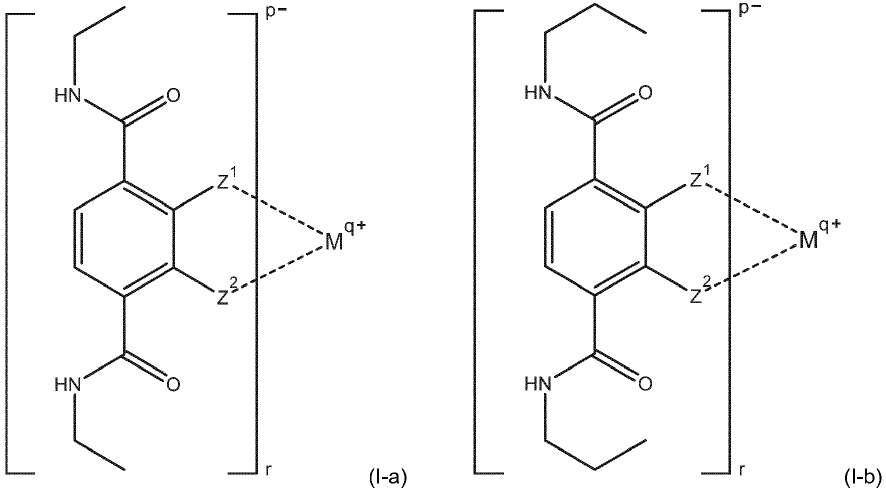 in denen Z¹, Z², p, r, q und M gemäß Formel (I) definiert sind.

Die Catechol-Metallkomplexverbindungen der vorliegenden Erfindung enthalten ein Metallkation M, das für ein Metallkation eines Übergangsmetalls oder Lanthanoids steht. Unter einem Übergangsmetall versteht der Fachmann Metalle aus den Übergangselementen des Periodensystems der Elemente gemäß der nach IUPAC-Regel I-3.8.2 der Anorganischen Chemie gegebenen Definition. Lanthanoide sind dem Fachmann als Lanthan und die auf Lanthan folgenden Elemente der Seltenerdmetalle mit den Ordnungszahlen 58 bis 70 bekannt.

Bevorzugte Catechol-Metallkomplexverbindungen der Formeln (I), (I-a) und (I-b) enthalten ein Metallkation M ausgewählt aus Ti, Zr, Hf, V, Nb, Ta, Cr. Mo, W, Mn, Fe, Ru, Co, Ni, Cu, Zn, Ce, Sm oder Hydraten dieser Metallionen. Darunter sind wiederum solche Catechol-Metallkomplexverbindungen der Formel (I) besonders geeignet, bei denen in Formel (I) M als Metallkation ausgewählt ist aus einem Metallkation von Fe, Mn, Cr, Ni, Co, Ce, Cu oder Hydraten dieser Metallionen (insbesondere ausgewählt aus Fe(II), Fe(III), Mn(II), Mn(IV), Ni(II), Co(II), Co(III), Ce(III), Cu(II) oder Hydraten dieser Metallionen).

Die Catechol-Metallkomplexverbindungen der der Formeln (I), (I-a) und (I-b) sind farbig. Bevorzugte Catechol-Metallkomplexverbindungen der Formel (I) sind dadurch gekennzeichnet, dass sie Licht in einer Wellenlänge von 400 bis 800 nm absorbieren, gemessen mittels UV-VIS-Spektralphotometer (z.B. Specord^{®} S 600 mit Photodiodenarray der Firma Analytik Jena AG) bei einer Konzentration des Komplexes von 10⁻⁵ mol/L in Wasser bei 20°C, einem pH-Wert von 8 und einer Schichtdicke von 1 cm.

Die erfindungsgemäßen Catechol-Metallkomplexverbindungen der Formel (I) lassen sich bereitstellen, in dem 0,1·r mmol freier Ligand in Form der korrespondierenden Catecholverbindung in 10 mL Methanol gelöst werden. Dazu gibt man 0,1·r mmol KOH (als 0,5M Lösung in Methanol) (r ist wie in Formel (I) definiert (*vide supra*)). 0,1 mmol des Metallchlorids werden in 4 mL Methanol gelöst, diese Lösung wird zur ersten Lösung zugegeben. Man rührt für eine Stunde, engt die resultierende Lösung auf 4 mL ein und gibt zu ihr 50 mL Diethylether hinzu. Der ausgefällte Metallkomplex wird durch Filtration isoliert.

Dabei ist es bevorzugt, wenn bezogen auf das Gesamtgewicht der ersten flüssigen Zusammensetzung die Catechol-Metallkomplexverbindung der Formel (I) in Komponente K1 in einer Gesamtmenge von 0,001 bis 10,0 Gew.%, bevorzugt von 0,01 bis 3,0 Gew.%, enthalten ist. Dabei ist es wiederum besonders bevorzugt, wenn die Komponente K2 und die gegebenenfalls weiteren vorhandenen Komponenten des Mehrkomponenten-Waschmittels jeweils im Wesentlichen frei sind von Verbindungen der Formel (I) und Verbindungen der Formel (II), bevorzugt wenn die Komponente K2 und die gegebenenfalls weiteren vorhandenen Komponenten des Mehrkomponenten-Waschmittels jeweils weniger als 0,001 Gew.% von Verbindungen der Formel (I) und jeweils weniger als 0,001 Gew.% von Verbindungen der Formel (II) enthalten.

Die Komponente K1 des erfindungsgemäßen Mehrkomponenten-Waschmittels enthält zwingend mindestens eine freie Catechol-Verbindung gemäß Formel (II). Die "freie Catecholverbindung" der Formel (II) liegt im Rahmen der obigen Maßgabe als unkomplexierter Ligand vor und/oder als Komplex, der von Verbindungen der Formel (I) verschieden ist. Das Salz der freien Catecholverbindung der Formel (II) liegt an mindestens einer der direkt an den Catechol-Phenylring bindenden OH-Gruppen deprotoniert vor, wobei die entstehende negative Ladung durch ein entsprechendes Kation-Äquivalent neutralisiert wird. Dabei kann das Salz der freien Catecholverbindung in dem erfindungsgemäßen Waschmittel dissoziiert vorliegen und/oder ein Komplex an ein Kation-Äquivalent als Zentralion sein, wobei besagtes Kation-Äquivalent von dem Metallkation M der Formel (I) verschieden ist.

Bevorzugte Kation-Äquivalente des Salzes der freien Catecholverbindung der Formel (II) werden ausgewählt aus Alkalimetallion (bevorzugt Na⁺ oder K⁺), Erdalkalimetallion (bevorzugt Ca²⁺ oder Mg²⁺), Ammoniumion, Alkanolammoniumion. Als Alkanolammoniumionen kommen bevorzugt 2-Ammonioethan-1-ol, Tris(2-hydroxyethyl)ammonium, 3-Ammoniopropan-1-ol, 4-Ammoninbutan-1-ol, 5-Amnoniopentan-1-ol, 1-Ammoniopropan-2-ol, 1-Ammoniobutan-2-ol, 1-Ammoniopentan-2-ol, 1-Ammoniopentan-3-ol, 1-Ammoniopentan-4-ol, 3-Ammonio-2-methylpropan-1-ol, 1-Ammonio-2-methylpropan-2-ol, 3-Ammoniopropan-1,2-diol, 2-Ammonio-2-methylpropan-1,3-diol (insbesondere 2-Ammonioethan-1-ol, Tris(2-hydroxyethyl)ammonium, 2-Ammonio-2-methylpropan-1-ol, 2-Ammonio-2-methyl-propan-1,3-diol), oder Mischungen davon in Betracht.

Bevorzugt stehen in dem erfindungsgemäßen Mehrkomponenten-Waschmittel die Reste R³ und R⁴ der Formel (II) unabhängig voneinander für eine Alkylgruppe, eine Alkoxyalkylgruppe, eine Hydroxyalkylgruppe, eine Hydroxyalkyloxyalkyl-Gruppe, (N-Hydroxyethyl)-aminoethyl, (N-Methoxyethyl)-aminoethyl oder (N-Ethoxyethyl)-aminoethyl, oder eine aromatische Gruppe stehen (bevorzugt für Methyl, ethyl, n-Propyl, Isopropyl, n-Butyl, sec-Butyl, tert-Butyl, iso-Butyl, n-pentyl, iso-Pentyl, Neopentyl, Hexyl, 2-Hydroxyethyl, 2-Hydroxypropyl, 3-Hydroxypropyl, 2-Methoxyethyl, 2-Ethoxyethyl, 3-Methoxypropyl, 3-Ethoxypropyl, (N-Hydroxyethyl)-aminoethyl, (N-Methoxyethyl)-aminoethyl oder (N-Ethoxyethyl)-aminoethyl oder Phenyl).

Bevorzugte Verbindungen der Formel (II) sind solche, bei denen die Reste R³ und R⁴ gleich sind.

Die bevorzugtem Reste R³ und R⁴ der Formel (II) werden unter den bevorzugten Resten R¹ und R² der Formel (I) ausgewählt.

Ganz besonders bevorzugt werden die Reste R³ und R⁴ der Formel (II) abhängig von den Resten R¹ und R² der Formel (I) ausgewählt, wobei am bevorzugtesten die Reste R¹, R², R³ und R⁴ identisch sind.

Weitere bevorzugte ausgewählte Catechol-Verbindungen der Formel (II) ist mindestens eine Verbindung der allgemeinen Formel (II-a), 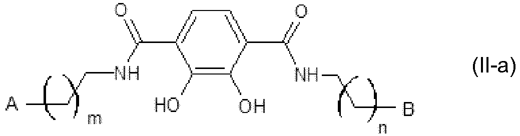 in der m und n unabhängig voneinander für 0 bis 5 und A und B unabhängig voneinander für ein Wasserstoffatom, -NR¹R², -N⁺R¹R²R³X⁻, stehen sowie R¹, R² und R³ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen.

Unter den Verbindungen der allgemeinen Formel (II-a) sind solche bevorzugt, in denen A und B gleich sind.

X⁻ gemäß Formel (II-a) wird vorzugsweise aus der Gruppe umfassend Lactat, Citrat, Tartrat, Succinat, Perchlorat, Tetrafluoroborat, Hexafluorophosphat, Alkylsulfonat, Alkylsulfat, Hydrogensulfat, Sulfat, Dihydrogenphosphat, Hydrogenphosphat, Phosphat, Isocyanat, Rhodanid, Nitrat, Fluorid, Chlorid, Bromid, Hydrogencarbonat und Carbonat sowie Mischungen aus mindestens zweien von diesen ausgewählt, wobei der Ladungsausgleich bei Anwesenheit mehrwertiger Anionen durch die Anwesenheit entsprechend mehrerer kationischer Grundgerüste der allgemeinen Formel (II) oder gegebenenfalls durch die Anwesenheit zusätzlicher Kationen wie Natrium- oder Ammoniumionen gewährleistet werden kann.

Es ist erfindungsgemäß bevorzugt, wenn gemäß Formel (II-a) A und B für ein Wasserstoffatom stehen.

Höchst bevorzugte Catechol-Verbindungen der Formel (II) sind die Verbindungen der Formeln (IIb) und/oder (II-c).

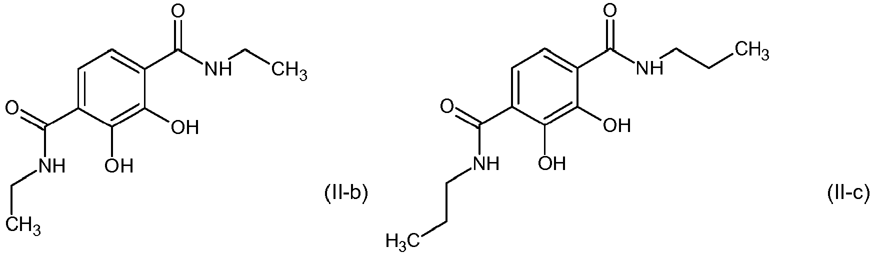

Bevorzugte erfindungsgemäße Mehrkomponenten-Waschmittel enthalten bezogen auf das Gesamtgewicht der ersten flüssigen Zusammensetzung die freie Catechol-Verbindung gemäß Formel (II) in Komponente K1 in einer Gesamtmenge von 0,5 Gew.% bis 50 Gew.%, bevorzugt von 1,0 Gew.% bis 40 Gew.%, weiter bevorzugt von 3,0 Gew.% bis 30 Gew.%, am bevorzugtesten von 5,0 Gew.% bis 20,0 Gew.%. Dabei ist es wiederum besonders bevorzugt, wenn die Komponente K2 und die gegebenenfalls weiteren vorhandenen Komponenten des Mehrkomponenten-Waschmittels jeweils im Wesentlichen frei sind von Verbindungen der Formel (I) und Verbindungen der Formel (II), bevorzugt wenn die Komponente K2 und die gegebenenfalls weiteren vorhandenen Komponenten des Mehrkomponenten-Waschmittels jeweils weniger als 0,001 Gew.% von Verbindungen der Formel (I) und jeweils weniger als 0,001 Gew.% von Verbindungen der Formel (II) enthalten.

Es ist bevorzugt, wenn das erfindungsgemäße Mehrkomponenten-Waschmittel bezogen auf dessen Gesamtgewicht die freie Catechol-Verbindung der Formel (II) in einer Gesamtmenge von 0,1 bis 10,0 Gew.-%, bevorzugt von 0,3 bis 3,0 Gew.-%, enthält. Dabei ist es wiederum besonders bevorzugt, wenn die Komponente K2 und die gegebenenfalls weiteren vorhandenen Komponenten des Mehrkomponenten-Waschmittels jeweils im Wesentlichen frei sind von Verbindungen der Formel (I) und Verbindungen der Formel (II), bevorzugt wenn die Komponente K2 und die gegebenenfalls weiteren vorhandenen Komponenten des Mehrkomponenten-Waschmittels jeweils weniger als 0,001 Gew.% von Verbindungen der Formel (I) und jeweils weniger als 0,001 Gew.% von Verbindungen der Formel (II) enthalten.

Die zweite flüssige Zusammensetzung der Komponente K2 des erfindungsgemäßen Mehrkomponenten-Waschmittels enthält mindestens ein Tensid. Dabei kann mindestens ein Tensid zusätzlich in den weiteren Komponenten des besagten Mehrkomponenten-Waschmittels enthalten sein. Insbesondere ist es bevorzugt, wenn die Komponente K1 mindestens ein Tensid enthält.

Es ist wiederum besonders bevorzugt, wenn bezogen auf das Gewicht des erfindungsgemäßen Mehrkomponenten-Waschmittels Tensid in einer Gesamtmenge von 10 bis 70 Gew.-%, insbesondere 20 bis 65 Gew.-%, ganz besonders bevorzugt 30 bis 65 Gew.-% insbesondere 30 bis 60 Gew.-% enthalten ist.

Zur Gruppe der Tenside werden die nichtionischen, die anionischen, die kationischen und die amphoteren Tenside gezählt. Erfindungsgemäß kann die Zusammensetzung eines oder mehrere der genannten Tenside umfassen. Besonders bevorzugt umfasst sie wenigstens ein oder mehrere Aniontenside (anionische Tenside), welche besonders bevorzugt bezogen auf das Gewicht des erfindungsgemäßen Mehrkomponenten-Waschmittels in einer Gesamtmenge von 15 bis 50 Gew.-%, insbesondere von 20 bis 40 Gew.-%, enthalten sind.

Das wenigstens eine anionische Tensid ist bevorzugt ausgewählt aus der Gruppe umfassend C₉-C₁₃-Alkylbenzolsulfonaten, Olefinsulfonaten, C₁₂-C₁₉-Alkansulfonaten, Estersulfonaten, Alk(en)ylsulfaten, Fettalkohohlethersulfaten und Mischungen daraus. Es hat sich gezeigt, dass sich diese Sulfonat- und Sulfat-Tenside besonders gut zur Herstellung stabiler flüssiger Zusammensetzungen mit Fließgrenze eignen. Mehrkomponenten-Waschmittel und besonders bevorzugte zweite flüssige Zusammensetzungen, die jeweils als anionisches Tensid C₉-C₁₃-Alkylbenzolsulfonate und Fettalkoholethersulfate umfassen, weisen besonders gute, dispergierende Eigenschaften auf. Als Tenside vom Sulfonat-Typ kommen dabei vorzugsweise C₉-C₁₃-Alkylbenzolsulfonate, Olefinsulfonate, das heißt Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch C₁₂-C₁₈-Alkansulfonate und die Ester von α-Sulfofettsäuren (Estersulfonate), zum Beispiel die α-sulfonierten Methylester der hydrierten Kokos-, Palmkern- oder Talgfettsäuren.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoatkohote und diejenigen Halbester sekundärer Alkohole dieser Kettenlängen bevorzugt. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate sind geeignete anionische Tenside.

Als Alk(en)ylsulfate werden bevorzugt die Salze der Schwefelsäurehalbester der Fettalkohole mit 12 bis 18 C-Atomen, beispielsweise aus Kokosfettalkohol, Talgfettalkohol, Lauryl-, Myristyl-, Cetyl- oder Stearylalkohol oder der Oxo-Alkohole mit 10 bis 20 C-Atomen und diejenigen Halbester sekundärer Alkohole dieser Kettenlängen bevorzugt. Aus waschtechnischem Interesse sind die Alkylsulfate mit 12 bis 16 C-Atomen und Alkylsulfate mit 12 bis 15 C-Atomen sowie Alkylsulfate mit 14 und 15 C-Atomen bevorzugt. Auch 2,3-Alkylsulfate sind geeignete anionische Tenside.

Auch Fettalkoholethersulfate, wie die Schwefelsäuremonoester der mit 1 bis 6 Mol Ethylenoxid ethoxylierten geradkettigen oder verzweigten C₇-C₂₁-Alkohole, wie 2-Methyl-verzweigte C9-11-Alkohole mit im Durchschnitt 3,5 Mol Ethylenoxid (EO) oder C12-18-Fettalkohole mit 1 bis 4 EO, sind geeignet. Bevorzugt sind Alkylethersulfate mit der Formel (A-1)

R¹-O-(AO)ₙ-SO₃- X⁺ (A-1)

In dieser Formel (A-1) steht R¹ für einen linearen oder verzweigten, substituierten oder unsubstituierten Alkylrest, vorzugsweise für einen linearen, unsubstituierten Alkylrest, besonders bevorzugt für einen Fettalkoholrest. Bevorzugte Reste R¹ der Formel (A-1) sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ der Formel (A-1) sind abgeleitet von Fettalkoholen mit 12 bis 18 C-Atomen, beispielsweise von Kokosfettalkohol, Talgfettalkohol, Lauryl-, Myristyl-, Cetyl- oder Stearylalkohol oder von Oxoalkoholen mit 10 bis 20 C-Atomen.

AO steht in Formel (A-1) für eine Ethylenoxid- (EO) oder Propylenoxid- (PO) Gruppierung, vorzugsweise für eine Ethylenoxidgruppierung. Der Index n der Formel (A-1) ist eine ganze Zahl von 1 bis 50, vorzugsweise von 1 bis 20 und insbesondere von 2 bis 10. Ganz besonders bevorzugt ist n 2, 3, 4, 5, 6, 7 oder 8. X ist ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X⁺ können ausgewählt sein aus NH4⁺, ½ Zn²⁺, ½ Mg²⁺,½ Ca²⁺,½ Mn²⁺, und deren Mischungen.

Besonders bevorzugte Mehrkomponenten-Waschmittel und besonders bevorzugte zweite flüssige Zusammensetzungen enthalten ein Alkylethersulfat ausgewählt aus Fettalkoholethersulfaten der Formel A-2 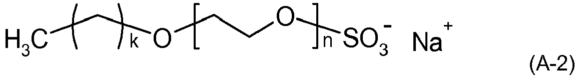 mit k = 11 bis 19, n = 2, 3, 4, 5, 6, 7 oder 8. Ganz besonders bevorzugte Vertreter sind Na Fettalkoholethersulfate mit 12 bis 18 C-Atomen und 2 EO (k = 11 bis 13, n = 2 in Formel A-1). Der angegebenen Ethoxylierungsgrad stellt einen statistischen Mittelwert dar, der für ein spezielles Produkt eine ganze oder eine gebrochene Zahl sein kann. Die angegebenen Alkoxylierungsgrade stellen statistische Mittelwerte dar, die für ein spezielles Produkt eine ganze oder eine gebrochene Zahl sein können. Bevorzugte Alkoxylate/Ethoxylate weisen eine eingeengte Homologenverteilung auf (narrow range ethoxylates, NRE).

Es ist bevorzugt, dass das erfindungsgemäße Mehrkomponenten-Waschmittel und besonders bevorzugte zweite flüssige Zusammensetzungen eine Mischung aus Sulfonat- und Sulfat-Tensiden enthalten. In einer besonders bevorzugten Ausführungsform enthält die Zusammensetzung C9-13-Alkylbenzolsulfonate und gegebenenfalls zusätzlich Fettalkoholethersulfate als anionisches Tensid.

Es ist ganz besonders bevorzugt, wenn in der Zusammensetzung mindestens ein anionisches Tensid der Formel (A-3) enthalten ist, 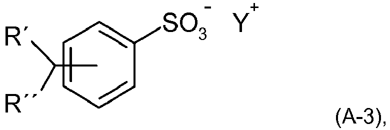 in der
R' und R" unabhängig H oder Alkyl sind und zusammen 9 bis 19, vorzugsweise 9 bis 15 und insbesondere 9 bis 13 C-Atome enthalten, und Y⁺ ein einwertiges Kation oder den n-ten Teil eines n-wertigen Kations (insbesondere Na⁺) bedeuten.

Zusätzlich zu dem anionischen Tensid können besagte Mehrkomponenten-Waschmittel und besonders bevorzugte zweite flüssige Zusammensetzungen auch Seifen enthalten. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside sowie die Seifen können in Form ihrer Natrium-, Kalium- oder Magnesium- oder Ammoniumsalze vorliegen. Vorzugsweise liegen die anionischen Tenside in Form ihrer Ammoniumsalze vor, wobei sich das Ammonium-Ion von mindestens einem (C₂-C₆)-Alkanolamin ableitet. Weitere bevorzugte Gegenionen für die anionischen Tenside sind auch die protonierten Formen von Cholin, Triethylamin, Monoethanolamin, Triethanolamin oder Methylethylamin.

Das erfindungsgemäße Mehrkomponenten-Waschmittel und besonders bevorzugte erste flüssige Zusammensetzungen und besonders bevorzugte zweite flüssige Zusammensetzungen können (bevorzugt gemeinsam mit mindestens einem anionischen Tensid) auch wenigstens ein nichtionisches Tensid aufweisen. Das nichtionische Tensid umfasst alkoxylierte Fettalkohole, alkoxylierte Fettsäurealkylester, Fettsäureamide, alkoxylierte Fettsäureamide, Polyhydroxyfettsäureamide, Alkylphenolpolyglycolether, Aminoxide, Alkylpolyglucoside und Mischungen daraus. Es ist wiederum besonders bevorzugt, wenn bezogen auf das Gewicht der erfindungsgemäßen Zusammensetzung nichtionisches Tensid in einer Gesamtmenge von 10 bis 40 Gew.-%, insbesondere von 15 bis 35 Gew.-%, enthalten ist.

Als nichtionisches Tensid werden vorzugsweise alkoxylierte, vorteilhafterweise ethoxylierte, insbesondere primäre Alkohole mit vorzugsweise 8 bis 18 C-Atomen und durchschnittlich 4 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 5 bis 8 EO pro Mol Alkohol bevorzugt. Zu den bevorzugten ethoxylierten Alkoholen gehören beispielsweise C12-14-Alkohole mit 4 EO oder 7 EO, C9-11-Alkohol mit 7 EO, C13-15-Alkohole mit 5 EO, 7 EO oder 8 EO, C₁₂-C₁₈-Atkohote mit 5 EO oder 7 EO und Mischungen aus diesen. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO (Propylenoxid)-Gruppen zusammen im Molekül enthalten, sind erfindungsgemäß einsetzbar. Geeignet sind ferner auch eine Mischung aus einem (stärker) verzweigten ethoxylierten Fettalkohol und einem unverzweigten ethoxylierten Fettalkohol, wie beispielsweise eine Mischung aus einem C₁₆-C₁₈-Fettalkohol mit 7 EO und 2-Propylheptanol mit 7 EO. Insbesondere bevorzugt enthält das Waschmittel einen C₁₂-C₁₈-Fettalkohol mit 7 EO oder einen C₁₃-C₁₅-Oxoatkohot mit 7 EO als nichtionisches Tensid.

Besonders bevorzugt enthält das erfindungsgemäße Mehrkomponenten-Waschmittel, insbesondere die Komponente K1, mindestens ein nichtionisches Tensid gemäß Formel (N-1)

R³-O-(XO)ₘ-H, (N-1)

in der
- R³: für einen linearen oder verzweigten C₈-C₁₈-Alkylrest, einen Arylrest oder Alkylarylrest,
- XO: unabhängig voneinander für eine Ethylenoxid- (EO) oder Propylenoxid- (PO) Gruppierung,
- m: für ganze Zahlen von 1 bis 50 stehen.

In der vorstehenden Formel (N-1) steht R¹ für einen linearen oder verzweigten, subtituierten oder unsubstituierten Alkylrest. In einer bevorzugten Ausführungsform der vorliegenden Erfindung ist R¹ ein linearer oder verzweigter Alkylrest mit 5 bis 30 C-Atomen, vorzugsweise mit 7 bis 25 C-Atomen und insbesondere mit 10 bis 19 C-Atomen. Bevorzugte Reste R¹ sind ausgewählt aus Decyl-, Undecyl-, Dodecyl-, Tridecyl-, Tetradecyl, Pentadecyl-, Hexadecyl-, Heptadecyl-, Octadecyl-, Nonadecylresten und deren Mischungen, wobei die Vertreter mit gerader Anzahl an C-Atomen bevorzugt sind. Besonders bevorzugte Reste R¹ sind abgeleitet von Fettalkoholen mit 12 bis 19 C-Atomen, beispielsweise von Kokosfettalkohol, Talgfettalkohol, Lauryl-, Myristyl-, Cetyl- oder Stearylalkohol oder von Oxoalkoholen mit 10 bis 19 C-Atomen.

AO der Formel (N-1) ist eine Ethylenoxid- (EO) oder Propylenoxid- (PO) Gruppierung, vorzugsweise eine Ethylenoxidgruppierung. Der Index m der Formel (N-1) ist eine ganze Zahl von 1 bis 50, vorzugsweise 2 bis 20 und bevorzugt 2 bis 10. Insbesondere ist m 3, 4, 5, 6 oder 7. Die erfindungsgemäße Zusammensetzung kann Mischungen von nichtionischen Tensiden enthalten, die verschiedene Ethoxylierungsgrade aufweisen. Bevorzugt sind Tenside mit Alkoxylierungs-/Ethoxylierungsgraden von mindestens 5.

Zusammenfassend sind besonders bevorzugte Fettalkoholalkoxylate solche der Formel 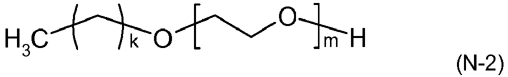 mit k = 9 bis 17, m = 3, 4, 5, 6 oder 7. Ganz besonders bevorzugte Vertreter sind Fettalkohole mit 10 bis 18 C-Atomen und mit 7 EO (k = 11-17, m = 7 in Formel N-2).

Solche Fettalkohol- oder Oxoalkoholethoxylate sind unter den Verkaufsbezeichnungen Dehydol^{®} LT7 (BASF), Lutensol^{®} AO7 (BASF), Lutensol^{®} M7 (BASF) und Neodol^{®} 45-7 (Shell Chemicals) erhältlich.

Die erfindungsgemäßen Mehrkomponenten-Waschmittel enthalten bevorzugt mindestens ein Alkalisierungsmittel oder dessen Salz in einer Gesamtmenge von 1 bis 20 Gew.-%, bevorzugt von 2 bis 15 Gew.-%. Dabei ist es bevorzugt, dass Alkalisierungsmittel in der Komponente K1 und/oder K2 enthalten ist.

Die Gesamtmenge des Alkalisierungsmittels und dessen Salz, bzw die Gesamtmenge aller folgenden bevorzugten Vertreter, wird auf Basis der Basenform berechnet, d.h. wenn das Alkalisierungsmittel im erfindungsgemäßen Waschmittel (teilweise) in seiner Salzform vorliegt, wird bei der Mengenberechnung das Gegenion vernachlässigt und für den Salzanteil nur die Basenform ohne das aufgenommene Proton angenommen.

Die Alkalisierungsmittel werden bevorzugt ausgewählt aus (C₂ bis C₆)-Alkanolamin, Natriumhydroxid, Kaliumhydroxid, Natriumcarbonat, Natriumhydrogencarbonat oder Mischungen daraus.

Unter dem Begriff (C₂ bis C₆)-Alkanolamin sind erfindungsgemäß organische Aminverbindungen zu verstehen, die ein Kohlenstoffgerüst aus zwei bis sechs Kohlenstoffatomen besitzen, an das mindestens eine Aminogruppe (bevorzugt genau eine Aminogruppe) und mindestens eine Hydroxygruppe (wiederum bevorzugt genau eine Hydroxygruppe) bindet.

Bei erfindungsgemäß bevorzugten (C₂ bis C₆)-Alkanolaminen handelt es sich um primäre Amine.

Im Rahmen der Erfindung ist es bevorzugt mindestens ein (C₂ bis C₆)-Alkanolamin mit genau einer Aminogruppe einzusetzen. Hierbei handelt es sich wiederum bevorzugt um ein primäres Amin.

Die erfindungsgemäße Zusammensetzung enthält bevorzugt mindestens ein (C₂ bis C₆)-Alkanolamin ausgewählt unter 2-Aminoethan-1-ol (Monoethanolamin), Tris(2-hydroxyethyl)amin (Triethanolamin), 3-Aminopropan-1-ol, 4-Aminobutan-1-ol, 5-Aminopentan-1-ol, 1-Aminopropan-2-ol, 1-Aminobutan-2-ol, 1-Aminopentan-2-ol, 1-Aminopentan-3-ol, 1-Aminopentan-4-ol, 3-Amino-2-methylpropan-1-ol, 1-Amino-2-methylpropan-2-ol, 3-Aminopropan-1,2-diol, 2-Amino-2-methylpropan-1,3-diol (insbesondere unter 2-Aminoethan-1-ol, 2-Amino-2-methylpropan-1-ol, 2-Amino-2-methyl-propan-1,3-diol), oder Mischungen davon. Monoethanolamin hat sich als ganz besonders geeignetes (C₂ bis C₆)-Alkanolamin als Alkalisierungsmittel erwiesen.

(C₂ bis C₆)-Alkanolamin oder dessen Salz ist besonders bevorzugt in einer Gesamtmenge von 1 bis 20 Gew.-%, bevorzugt von 2 bis 15 Gew.-%, in den erfindungsgemäßen Waschmitteln enthalten, jeweils bezogen auf die basische Form.

Es hat sich als erfindungsgemäß bevorzugt erwiesen, wenn die erste flüssige Zusammensetzung, und/oder die zweite flüssige Zusammensetzung mindestens ein organisches Lösemittel enthalten. Dabei ist es erfindungsgemäß besonders bevorzugt, wenn zumindest die erste flüssige Zusammensetzung mindestens ein organisches Lösemittel enthält.

Vorzugsweise weist das zusätzliche mindestens eine organische Lösemittel mindestens eine Hydroxylgruppe aber keine Aminogruppe auf und hat ein Molekulargewicht von höchstens 500 g/mol.

Besagtes mindestens eine organische Lösemittel wird wiederum bevorzugt ausgewählt aus (C₂-C₈)-Alkanolen mit mindestens einer Hydroxylgruppe (besonders bevorzugt ausgewählt aus der Gruppe, Ethanol, Ethylenglycol,1,2-Propandiol, Glycerin, 1,3-Propandiol, n-Propanol, Isopropanol, 1,1,1-Trimethylolpropan, 2-Methyl-1,3-propandiol, 2-Hydroxymethyl-1,3-propandiol, oder Mischungen daraus), Triethylenglycol, Butyldiglycol, Polyethylenglycolen mit einer gewichtsmittleren Molmasse M_{w} von höchstens 500 g/mol, Glycerincarbonat, Propylencarbonat, 1-Methoxy-2-propanol, 3-Methoxy-3-methyl-1-butanol, Butyllactat, 2-Isobutyl-2-methyl-4-hydroxymethyl-1,3-dioxolan, 2,2-Dimethyl-4-hydroxymethyl-1,3-dioxolan, Dipropylenglycol, oder Mischungen daraus.

Dabei ist es wiederum besonders bevorzugt, wenn bezogen auf das Gesamtgewicht der besagten flüssigen Zusammensetzung einer Komponente des Mehrkomponenten-Waschmittels besagtes organisches Lösemittel in einer Gesamtmenge von 5 bis 40 Gew.-%, insbesondere von 10 bis 35 Gew.-%, in dieser besagten flüssigen Zusammensetzung enthalten ist.

Das erfindungsgemäße Mehrkomponenten-Waschmittel enthält bevorzugt Wasser. Es ist bevorzugt, wenn in einer flüssigen Zusammensetzung einer Komponente des Mehrkomponenten-Waschmittels (insbesondere der Komponente K1 und der Komponente K2) Wasser bezogen auf das Gesamtgewicht der besagten flüssigen Zusammensetzung in einer Gesamtmenge zwischen 0 und 45 Gew.-%, besonders bevorzugt zwischen 0 und 25 Gew.-% enthalten ist. Der Anteil an Wasser in der besagten flüssigen Zusammensetzung beträgt ganz besonders bevorzugt 25 Gew.-% oder weniger, wiederum bevorzugter 20 Gew.-% oder weniger, wiederum bevorzugter 15 Gew.-%, oder weniger, insbesondere zwischen 12 und 4 Gew.-%. Die Angaben in Gew.-% beziehen sich auf das Gesamtgewicht der besagten flüssigen Zusammensetzung einer Komponente des erfindungsgemäßen Mehrkomponenten-Waschmittels.

Die Komponenten des erfindungsgemäßen Mehrkomponenten-Waschmittels können zusätzlich mindestens einen Farbstoff enthalten. Dieser kann zur Anfärbung der Komponente dienen und/oder als Bläuungsmittel zur Steigerung des Weißgrads der Wäsche. Bevorzugte erfindungsgemäße Mehrkomponenten-Waschmittel sind jedoch dadurch gekennzeichnet, dass die Komponente K1 des Mehrkomponenten-Waschmittels im Wesentlichen frei ist von Farbstoffen, die von der Catechol-Metallkomplexverbindung der Formel (I) verschieden sind.

Das erfindungsgemäße Mehrkomponenten-Waschmittel enthält in mindestens einer seiner Komponenten bevorzugt zusätzlich mindestens einen Aktivstoff. Aktivstoffe im Sinne der vorliegenden Erfindung sind insbesondere:
- Textilpflegemittel wie Weichmacher, Phobier- und Imprägniermittel gegen Wasser und Wiederanschmutzungen, Bleichaktivatoren, Enzyme, Silikonöle, Antiredepositionsmittel, optische Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Antistatika, Bügelhilfsmittel, Quell- und Schiebefestmittel, UV-Absorber, kationische Polymere,
- Hautpflegemittel oder
- Parfüm(öl) oder Riechstoffe.

Bevorzugt ist mindestens ein Aktivstoff ausgewählt aus Enzymen, optischen Aufhellern, Gerüststoffen, Lösemitteln, Antiredepositionsmitteln, Farbtransferinhibitoren, Konservierungsmitteln, Parfüm oder Mischungen aus mindestens zwei der vorgenannten Aktivstoffe.

Die zusätzlichen Aktivstoffe sind bevorzugt in den Komponenten enthalten, welche im Wesentlichen keine Catecholverbindung gemäß Formel (I) aufweisen, bevorzugt in Komponente K2.

Das Mehrkomponenten-Waschmittel kann ferner ein von der Catecholverbindung gemäß Formel (I) verschiedenes zusätzliches Bleichmittel enthalten. In einer bevorzugten Ausführungsform ist im Wesentlichen kein weiteres Bleichmittel enthalten.

Es ist bevorzugt, wenn das erfindungsgemäße Mehrkomponenten-Waschmittel zusätzlich mindestens ein Enzym, insbesondere ausgewählt aus Protease, Amylase, Lipase, Mannanase, Cellulase, Pectatlyase oder Mischungen daraus, enthält.

"Variante" ist auf der Ebene der Proteine der zu "Mutante" entsprechende Begriff auf der Ebene der Nukleinsäuren. Bei den Vorgänger- oder Ausgangsmolekülen kann es sich um Wildtypenzyme handeln, das heißt solche, die aus natürlichen Quellen erhältlich sind. Es kann sich auch um Enzyme handeln, die an sich bereits Varianten darstellen, das heißt gegenüber den Wildtypmolekülen bereits verändert worden sind. Darunter sind beispielsweise Punktmutanten, solche mit Änderungen der Aminosäuresequenz, über mehrere Positionen oder längere zusammenhängende Bereiche, oder auch Hybridmoleküle zu verstehen, die aus einander ergänzenden Abschnitten verschiedener Wildtyp Enzyme zusammengesetzt sind.

Unter Aminosäureaustauschen sind Substitutionen einer Aminosäure gegen eine andere Aminosäure zu verstehen. Erfindungsgemäß werden solche Substitutionen unter Bezeichnung der Positionen, in der der Austausch erfolgt, gegebenenfalls kombiniert mit den betreffenden Aminosäuren im international gebräuchlichen Einbuchstabencode angegeben. "Austausch in Position 320" bedeutet beispielsweise, dass eine Variante in der Position, die in der Sequenz eines Referenzproteins die Position 320 aufweist, eine andere Aminosäure aufweist. Üblicherweise werden solche Austausche auf der DNA-Ebene über Mutationen einzelner Basenpaare durchgeführt (siehe oben). "R320K" bedeutet beispielsweise, dass das Referenzenzym an der Position 320 die Aminosäure Arginin aufweist, während die betrachtete Variante an der hiermit homologisierbaren Position über die Aminosäure Lysin verfügt. "320K" bedeutet, dass jede beliebige, das heißt in der Regel eine natürlicherweise vorgegebene Aminosäure an einer Position, die der Position 320 entspricht, gegen ein Lysin ersetzt ist, welches sich im vorliegenden Molekül eben an dieser Stelle befindet. "R320K, L" bedeutet, dass die Aminosäure Arginin in Position 320 gegen Lysin oder Leucin ersetzt ist. Und "R320X" bedeutet, dass die Aminosäure Arginin in Position 320 gegen eine prinzipiell beliebige andere Aminosäure ersetzt ist.

Grundsätzlich sind die mit der vorliegenden Anmeldung bezeichneten erfindungsgemäßen Aminosäureaustausche nicht darauf beschränkt, dass sie die einzigen Austausche sind, in denen sich die betreffende Variante von dem Wildtypmolekül unterscheidet. Es ist im Stand der Technik bekannt, dass sich die vorteilhaften Eigenschaften einzelner Punktmutationen einander ergänzen können. Somit umfassen Ausführungsformen der vorliegenden Erfindung alle Varianten, die neben anderen Austauschen gegenüber dem Wildtypmolekül auch die erfindungsgemäßen Austausche aufweisen.

Ferner spielt es prinzipiell keine Rolle, in welcher Reihenfolge die betreffenden Aminosäureaustausche vorgenommen worden sind, das heißt ob eine entsprechende Punktmutante erfindungsgemäß weiterentwickelt wird oder zunächst beispielsweise aus einem Wildtypmolekül eine erfindungsgemäße Variante erzeugt wird, die entsprechend anderer im Stand der Technik zu findender Lehren weiterentwickelt wird. Es können auch gleichzeitig in einem Mutageneseansatz mehrere Austausche vorgenommen werden, etwa erfindungsgemäße und andere zusammen.

Es ist erfindungsgemäß bevorzugt, wenn als Enzym mindestens eine Protease enthalten ist. Eine Protease ist ein Enzym, das Peptidbindungen mittels Hydrolyse spaltet. Jedes der Enzyme aus der Klasse E.C. 3.4 fällt erfindungsgemäß darunter (umfassend jede der darunterfallenden dreizehn Unterklassen). Die EC-Nummer entspricht der Enzyme Nomenklatur 1992 der NC-IUBMB, Academic Press, San Diego, California, eingeschlossen der Ergänzungen 1 bis 5, publiziert in Eur. J. Biochem. 1994, 223, 1-5; Eur. J. Biochem. 1995, 232, 1-6; Eur. J. Biochem. 1996, 237, 1-5; Eur. J. Biochem. 1997, 250, 1-6; and Eur. J. Biochem. 1999, 264, 610-650.

Subtilase benennt eine Untergruppe der Serinproteasen. Die Serinproteasen oder Serinpeptidasen sind eine Untergruppe der Proteasen, die Serin im aktiven Zentrums des Enzyms besitzen, das ein kovalentes Addukt mit dem Substrat bildet. Weiterhin sind die Subtilasen (und die Serineproteasen) dadurch charakterisiert, dass sie neben besagtem Serin mit Histidin und Aspartam zwei weitere Aminosäurereste im aktiven Zentrum aufweisen. Die Subtilasen können in 6 Unterklassen, nämlich die Subtilisin Familie, die Thermitase Familie, die Proteinase K Familie, die Familie der lantibiotischen Peptidasen, die Kexin Familie und die Pyrolysin Familie. Die als Bestandteil der erfindungsgemäßen Zusammensetzungen bevorzugt ausgenommenen oder bevorzugt in reduzierten Mengen enthaltenen Proteasen sind Endopeptidasen (EC 3.4.21).

"Proteaseaktivität" liegt erfindungsgemäß vor, wenn das Enzym proteolytische Aktivität besitzt (EC 3.4). Verschiedenartige Proteaseaktivitäts-Typen sind bekannt: Die drei Haupttypen sind: Trypsin-artig, wobei eine Spaltung des Amidesubstrates nach den Aminosäuren Arg oder Lys bei P1 erfolgt; Chymotrypsin-artig, wobei eine Spaltung nach einer der hydrophoben Aminosäuren bei P1 erfolgt; und Elastase-artig, wobei eine Spaltung des Amidsubstrates nach Ala bei P1 erfolgt.

Die Proteaseaktivität kann nach der in Tenside, Band 7 (1970), S. 125-132 beschriebenen Methode ermittelt werden. Sie wird dementsprechend in PE (Protease-Einheiten) angegeben. Die Proteaseaktivität eines Enzyms lässt sich gemäß gängigen Standardmethoden, wie insbesondere unter Einsatz von BSA als Substrat (Rinderalbumin) und/oder mit der AAPF-Methode.

Überraschenderweise wurde festgestellt, dass eine Protease vom Typ der alkalischen Protease aus Bacillus lentus DSM 5483 oder eine hierzu hinreichend ähnliche Protease (bezogen auf die Sequenzidentität), die mehrere dieser Veränderungen in Kombination aufweist, besonders für den Einsatz in der erfindungsgemäßen Zusammensetzung geeignet und darin vorteilhafterweise verbessert stabilisiert wird. Vorteile des Einsatzes dieser Protease ergeben sich somit insbesondere hinsichtlich der Waschleistung und/oder der Stabilität.

Die Bestimmung der Identität von Nukleinsäure- oder Aminosäuresequenzen erfolgt durch einen Sequenzvergleich. Dieser Sequenzvergleich basiert auf dem im Stand der Technik etablierten und üblicherweise genutzten BLAST-Algorithmus (vgl. beispielsweise Altschul, S.F., Gish, W., Miller, W., Myers, E.W. & Lipman, D.J. (1990) "Basic local alignment search tool." J. Mol. Biol. 215:403-410, und Altschul, Stephan F., Thomas L. Madden, Alejandro A. Schaffer, Jinghui Zhang, Hheng Zhang, Webb Miller, and David J. Lipman (1997): "Gapped BLAST and PSI-BLAST: a new generation of protein database search programs"; Nucleic Acids Res., 25, S.3389-3402) und geschieht prinzipiell dadurch, dass ähnliche Abfolgen von Nukleotiden oder Aminosäuren in den Nukleinsäure- oder Aminosäuresequenzen einander zugeordnet werden. Eine tabellarische Zuordnung der betreffenden Positionen wird als Alignment bezeichnet. Ein weiterer im Stand der Technik verfügbarer Algorithmus ist der FASTA-Algorithmus. Sequenzvergleiche (Alignments), insbesondere multiple Sequenzvergleiche, werden mit Computerprogrammen erstellt. Häufig genutzt werden beispielsweise die Clustal-Serie (vgl. beispielsweise Chenna et al. (2003): Multiple sequence alignment with the Clustal series of programs. Nucleic Acid Research 31, 3497-3500), T-Coffee (vgl. beispielsweise Notredame et al. (2000): T-Coffee: A novel method for multiple sequence alignments. J. Mol. Biol. 302, 205-217) oder Programme, die auf diesen Programmen beziehungsweise Algorithmen basieren. In der vorliegenden Erfindung wurden alle Sequenzvergleiche (Alignments) mit dem Computer-Programm Vector NTI^{®} Suite 10.3 (Invitrogen Corporation, 1600 Faraday Avenue, Carlsbad, Kalifornien, USA) mit den vorgegebenen Standardparametern erstellt, dessen AlignX-Modul für die Sequenzvergleiche auf ClustalW basiert.

Solch ein Vergleich erlaubt auch eine Aussage über die Ähnlichkeit der verglichenen Sequenzen zueinander. Sie wird üblicherweise in Prozent Identität, das heißt dem Anteil der identischen Nukleotide oder Aminosäurereste an denselben oder in einem Alignment einander entsprechenden Positionen angegeben. Der weiter gefasste Begriff der Homologie bezieht bei Aminosäuresequenzen konservierte Aminosäure-Austausche in die Betrachtung mit ein, also Aminosäuren mit ähnlicher chemischer Aktivität, da diese innerhalb des Proteins meist ähnliche chemische Aktivitäten ausüben. Daher kann die Ähnlichkeit der verglichenen Sequenzen auch Prozent Homologie oder Prozent Ähnlichkeit angegeben sein. Identitäts- und/oder Homologieangaben können über ganze Polypeptide oder Gene oder nur über einzelne Bereiche getroffen werden. Homologe oder identische Bereiche von verschiedenen Nukleinsäure- oder Aminosäuresequenzen sind daher durch Übereinstimmungen in den Sequenzen definiert. Solche Bereiche weisen oftmals identische Funktionen auf. Sie können klein sein und nur wenige Nukleotide oder Aminosäuren umfassen. Oftmals üben solche kleinen Bereiche für die Gesamtaktivität des Proteins essentielle Funktionen aus. Es kann daher sinnvoll sein, Sequenzübereinstimmungen nur auf einzelne, gegebenenfalls kleine Bereiche zu beziehen. Soweit nicht anders angegeben beziehen sich Identitäts- oder Homologieangaben in der vorliegenden Anmeldung aber auf die Gesamtlänge der jeweils angegebenen Nukleinsäure- oder Aminosäuresäuresequenz.

Die Konzentration der Protease in dem Mehrkomponenten-Waschmittel beträgt bezogen auf dessen Gesamtgewicht von 0,001-0,1 Gew.-%, vorzugsweise von 0,01 bis 0,06 Gew.-%, bezogen auf aktives Protein.

Die erfindungsgemäßen Zusammensetzungen (besonders bevorzugt zusätzlich zur Protease) enthalten bevorzugt als Enzym mindestens ein Enzym, ausgewählt aus α-Amylase, Cellulase, Mannanase, Lipase, Pectatlyase.

Im Allgemeinen können die in einer erfindungsgemäßen Zusammensetzung enthaltenen Enzyme an Trägerstoffe adsorbiert und/oder in Hüllsubstanzen eingebettet sein, um sie gegen vorzeitige Inaktivierung zu schützen.

Erfindungsgemäße Zusammensetzungen können die erhaltenen Enzyme in jeder nach dem Stand der Technik etablierten Form zugesetzt werden. Hierzu gehören insbesondere die durch Granulation, Extrusion oder Lyophilisierung erhaltenen festen Präparationen, vorteilhafterweise möglichst konzentriert, wasserarm und/oder mit Stabilisatoren versetzt. In einer alternativen Darreichungsform können die Enzyme auch verkapselt werden, beispielsweise durch Sprühtrocknung oder Extrusion der Enzymlösung zusammen mit einem, vorzugsweise natürlichen Polymer oder in Form von Kapseln, beispielsweise solchen, bei denen die Enzyme wie in einem erstarrten Gel eingeschlossen sind, oder in solchen vom Kern-Schale-Typ, bei dem ein enzymhaltiger Kern mit einer Wasser-, Luft- und/oder Chemikalien-undurchlässigen Schutzschicht überzogen ist. In aufgelagerten Schichten können zusätzlich weitere Wirkstoffe, beispielsweise Stabilisatoren, Emulgatoren, Pigmente, oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Die Zusammensetzungen enthalten bevorzugt zusätzlich mindestens eine Cellulase. Eine Cellulase ist ein Enzym. Für Cellulasen können synonyme Begriffe verwendet werden, insbesondere Endoglucanase, Endo-1,4-beta-Glucanase, Carboxymethylcellulase, Endo-1,4-beta-D-Glucanase, beta-1,4-Glucanase, beta-1,4-Endoglucanhydrolase, Celludextrinase oder Avicelase. Entscheidend dafür, ob ein Enzym eine Cellulase im Sinne der Erfindung ist, ist deren Fähigkeit zur Hydrolyse von 1,4-ß-D-glucosidischen Bindungen in Cellulose.

Erfindungsgemäß konfektionierbare Cellulasen (Endoglucanasen, EG) umfassen beispielsweise die pilzliche, Endoglucanase(EG)-reiche Cellulase-Präparation beziehungsweise deren Weiterentwicklungen, die von dem Unternehmen Novozymes unter dem Handelsnamen Celluzyme^{®} angeboten wird. Die ebenfalls von dem Unternehmen Novozymes erhältlichen Produkte Endolase^{®} und Carezyme^{®} basieren auf der 50 kD-EG, beziehungsweise der 43 kD-EG aus Humicola insolens DSM 1800. Weitere einsetzbare Handelsprodukte dieses Unternehmens sind Cellusoft^{®}, Renozyme^{®} und Celluclean^{®}. Weiterhin einsetzbar sind beispielsweise Cellulasen, die von dem Unternehmen AB Enzymes, Finnland, unter den Handelsnamen Ecostone^{®} und Biotouch^{®} erhältlich sind, und die zumindest zum Teil auf der 20 kD-EG aus Melanocarpus basieren. Weitere Cellulasen von dem Unternehmen AB Enzymes sind Econase^{®} und Ecopulp^{®}. Weitere geeignete Cellulasen sind aus Bacillus sp. CBS 670.93 und CBS 669.93, wobei die aus Bacillus sp. CBS 670.93 von dem Unternehmen Danisco/Genencor unter dem Handelsnamen Puradax^{®} erhältlich ist. Weitere verwendbare Handelsprodukte des Unternehmens Danisco/Genencor sind "Genencor detergent cellulase L" und IndiAge^{®}Neutra.

Auch durch Punktmutationen erhältliche Varianten dieser Enzyme können erfindungsgemäß eingesetzt werden. Besonders bevorzugte Cellulasen sind Thielavia terrestris Cellulasevarianten, die in der internationalen Offenlegungsschrift WO 98/12307 offenbart sind, Cellulasen aus Melanocarpus, insbesondere Melanocarpus albomyces, die in der internationalen Offenlegungsschrift WO 97/14804 offenbart sind, Cellulasen vom EGIII-Typ aus Trichoderma reesei, die in der europäischen Patentanmeldung EP 1 305 432 offenbart sind bzw. hieraus erhältliche Varianten, insbesondere diejenigen, die offenbart sind in den europäischen Patentanmeldungen EP 1240525 und EP 1305432, sowie Cellulasen, die offenbart sind in den internationalen Offenlegungsschriften WO 1992006165, WO 96/29397 und WO 02/099091. Auf deren jeweilige Offenbarung wird daher ausdrücklich verwiesen bzw. deren diesbezüglicher Offenbarungsgehalt wird daher ausdrücklich in die vorliegende Erfindung mit einbezogen.

Erfindungsgemäß besonders bevorzugte Zusammensetzungen sind dadurch gekennzeichnet, dass als zusätzliche Cellulase mindestens eine Cellulase aus *Melanocarpus sp.* oder *Myriococcum sp.* erhältlicher 20K-Cellulase oder solcher, die eine Homologie von über 80% (zunehmend bevorzugt von über 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) dazu aufweist.

Die aus Melanocarpus sp. oder Myriococcum sp. erhältliche 20K-Cellulase ist aus der internationalen Patentanmeldung WO 97/14804 bekannt. Sie besitzt wie dort beschrieben ein Molekulargewicht von etwa 20 kDa und weist bei 50 °C im pH-Bereich von 4 bis 9 mindestens 80% ihrer maximalen Aktivität auf, wobei noch fast 50% der maximalen Aktivität bei pH 10 erhalten bleiben. Sie kann, wie ebenfalls dort beschrieben, aus Melanocarpus albomyces isoliert und in gentechnisch hergestellten Trichoderma reseei-Transformanten produziert werden. Im Sinne der vorliegenden Erfindung brauchbar sind auch Cellulasen, die eine Homologie von über 80% (zunehmend bevorzugt von über 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) zur 20K-Cellulase aufweisen.

K20-Cellulase wird vorzugsweise in solchen Mengen verwendet, dass eine erfindungsgemäße Zusammensetzung eine cellulolytische Aktivität von 1 NCU/g bis 500 NCU/g (bestimmbar durch die Hydrolyse von 1-gewichtsprozentiger Carboxymethylcellulose bei 50 °C und neutralem pH und Bestimmung der dabei freigesetzten reduzierenden Zucker mittels Dinitrosalicylsäure, wie von M.J.Bailey et al. in Enzyme Microb. Technol. 3: 153 (1981) beschrieben; 1 NCU definiert die Enzymmenge, die reduzierenden Zucker in einer Menge erzeugt, die 1 nmol Glukose pro Sekunde entspricht), insbesondere von 2 NCU/g bis 400 NCU/g und besonders bevorzugt von 6 NCU/g bis 200 NCU/g aufweist. Daneben kann die erfindungsgemäße Zusammensetzung gegebenenfalls noch weitere Cellulasen enthalten.

Eine erfindungsgemäße Zusammensetzung enthält vorzugsweise 0,001 mg bis 0,5 mg, insbesondere 0,02 mg bis 0,3 mg an cellulolytischem Protein pro Gramm der gesamten Zusammensetzung. Die Proteinkonzentration kann mit Hilfe bekannter Methoden, zum Beispiel dem Bicinchonsäure-Verfahren (BCA-Verfahren, Pierce Chemical Co., Rockford, IL) oder dem Biuret-Verfahren (A.G. Gornall, C.S. Bardawill und M.M. David, J. Biol. Chem. 177, 751-766, 1948) bestimmt werden.

Es ist erfindungsgemäß wiederum besonders bevorzugt, zusätzlich zu mindestens einer ersten Cellulase aus *Melanocarpus sp.* oder *Myriococcum sp.* erhältlicher 20K-Cellulase oder solcher, die eine Homologie von über 80% (zunehmend bevorzugt von über 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) dazu aufweist mindestens eine weitere von der ersten Cellulase verschiedene zweite Cellulase einzusetzen.

Es ist erfindungsgemäß bevorzugt, wenn die erfindungsgemäßen Zusammensetzungen zusätzlich mindestens eine Lipase enthalten. Erfindungsgemäß bevorzugte Lipase-Enzyme werden ausgewählt aus mindestens einem Enzym der Gruppe, die gebildet wird aus Triacylglycerol-Lipase (E.C. 3.1.1.3) und Lipoprotein-Lipase (E.C. 3.1.1.34) und Monoglycerid-Lipase (E.C. 3.1.1.23). Ferner ist die in einer erfindungsgemäßen Zusammensetzung bevorzugt enthaltene Lipase natürlicherweise in einem Mikroorganismus der Art *Thermomyces lanuginosus* oder *Rhizopus oryzae* oder *Mucor javanicus* vorhanden oder von vorgenannten natürlicherweise vorhandenen Lipasen per Mutagenese abgeleitet. Besonders bevorzugt enthalten die erfindungsgemäßen Zusammensetzungen mindestens eine Lipase, die natürlicherweise in einem Mikroorganismus der Art *Thermomyces lanuginosus* vorhanden oder sich von vorgenannten natürlicherweise in *Thermomyces lanuginosus* vorhandenen Lipasen per Mutagenese ableitet.

Natürlicherweise vorhanden bedeutet in diesem Zusammenhang, dass die Lipase ein eigenes Enzym des Mikroorganismus ist. Die Lipase kann folglich in dem Mikroorganismus von einer Nukleinsäuresequenz exprimiert werden, die Teil der chromosomalen DNA des Mikroorganismus in seiner Wildtyp-Form ist. Sie bzw. die für sie codierende Nukleinsäuresequenz ist folglich in der Wildtyp-Form des Mikroorganismus vorhanden und/oder kann aus der Wildtyp-Form des Mikroorganismus aus diesem isoliert werden. Im Gegensatz hierzu wäre eine nicht natürlicherweise in dem Mikroorganismus vorhandene Lipase bzw. die für sie codierende Nukleinsäuresequenz mit Hilfe gentechnischer Verfahren in den Mikroorganismus gezielt eingebracht worden, so dass der Mikroorganismus um die Lipase bzw. die für sie codierende Nukleinsäuresequenz bereichert worden wäre. Jedoch kann eine Lipase, die natürlicherweise in einem Mikroorganismus der Art *Thermomyces lanuginosus* oder *Rhizopus oryzae* oder *Mucor javanicus* vorhanden ist, aber durchaus rekombinant von einem anderen Organismus hergestellt worden sein.

Der Pilz *Thermomyces lanuginosus* (auch bekannt unter *Humicola lanuginosa*) zählt zur Klasse der Eurotiomycetes (Unterklasse Eurotiomycetidae), hierin zur Ordnung der Eurotiales und hierin zur Familie Trichocomaceae und der Gattung Thermomyces. Der Pilz *Rhizopus oryzae* zählt zur Klasse der Zygomyceten (Unterklasse Incertae sedis), hierin zur Ordnung Mucorales und hierin wiederum zur Familie Mucoraceae und der Gattung Rhizopus. Der Pilz *Mucor javanicus* zählt ebenfalls zur Klasse der Zygomyceten (Unterklasse Incertae sedis), hierin zur Ordnung Mucorales und hierin wiederum zur Familie Mucoraceae, hierin dann zur Gattung Mucor. Die Bezeichnungen *Thermomyces lanuginosus,* Rhizopus oryzae und Mucor javanicus sind die biologischen Artbezeichnungen innerhalb der jeweiligen Gattung.

Erfindungsgemäß bevorzugte Lipasen sind die von dem Unternehmen Amano Pharmaceuticals unter den Bezeichnungen Lipase M-AP10^{®}, Lipase LE^{®} und Lipase F^{®} (auch Lipase JV^{®}) erhältlichen Lipaseenzyme. Die Lipase F^{®} ist beispielsweise natürlicherweise in Rhizopus oryzae vorhanden. Die Lipase M-AP10^{®} ist beispielsweise natürlicherweise in Mucor javanicus vorhanden.

Zusammensetzungen einer ganz besonders bevorzugten Ausführungsform der Erfindung enthalten mindestens eine Lipase, die ausgewählt wird aus mindestens einem oder mehreren Polypeptiden mit einer Aminosäuresequenz, die zu mindestens 90% (und zunehmend bevorzugt zu mindestens 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) zur Wildtyp Lipase aus dem Stamm DSM 4109 *Thermomyces lanuginosus* identisch ist. Dabei ist es erneut bevorzugt, wenn ausgehend von besagter Wildtyp Lipase aus dem Stamm DSM 4109 zumindest die Aminosäureänderung N233R vorliegt.

Es sind im Rahmen einer weiteren Ausführungsform insbesondere solche Lipasen abgeleitet von der Wildtyp Lipase aus dem Stamm DSM 4109 erfindungsgemäß bevorzugt verwendbar, die ausgewählt werden aus mindestens einem Lipase-Enzym gemäß mindestens einem der Ansprüche 1 bis 13 der Druckschrift WO 00/60063 A1. Auf die Offenbarung Druckschrift WO 00/60063 A1 wird ausdrücklich vollumfänglich Bezug genommen.

Besonders bevorzugt wird in den Zusammensetzungen der Erfindung mindestens eine Lipase eingesetzt, die abgeleitet ist von der Wildtyp Lipase aus dem Stamm DSM 4109 und in der ausgehend von besagter Wildtyp Lipase mindestens eine Substitution einer elektrisch neutralen oder negativ geladenen Aminosäure durch eine positiv geladene Aminosäure erfolgte. Die Ladung wird in Wasser bei pH 10 bestimmt. Negative Aminosäuren im Sinne der Erfindung sind E, D, Y und C. Positiv geladene Aminosäuren im Sinne der Erfindung sind R, K und H, insbesondere R und K. Neutrale Aminosäure im Sinne der Erfindung sind G, A, V, L, I, P, F, W, S, T, M, N, Q und C, wenn C eine Disulfidbrücke ausbildet.

Im Rahmen dieser Ausführungsform der Erfindung ist es ebenfalls bevorzugt, wenn ausgehend von der Wildtyp Lipase aus dem Stamm DSM 4109 mindestens einen der folgenden Aminosäureaustausche in den Positionen D96L, T213R und/oder N233R, besonders bevorzugt T213R und N233R, vorliegt.

Eine höchst bevorzugte Lipase ist kommerziell unter dem Handelsnamen Lipex^{®} von dem Unternehmen Novozymes (Dänemark) zu beziehen und vorteilhaft in den erfindungsgemäßen Reinigungszusammensetzungen einsetzbar. Besonders bevorzugt ist hierbei die Lipase Lipex^{®} 100 L (ex Novozymes A/S, Dänemark). Bevorzugte erfindungsgemäße Mehrkomponenten-Waschmittel enthalten bezogen auf deren Gesamtgewicht besagtes Lipase-Enzym aus Lipex^{®} 100 L in einer Gesamtmenge von 0,01 bis 1,0 Gew.-%, insbesondere von 0,02 bis 0,1 Gew.-%, enthalten ist.

Die erfindungsgemäßen Zusammensetzungen können als Enzym zusätzlich mindestens eine Mannanase enthalten. Eine in der erfindungsgemäßen Zusammensetzung (insbesondere in einem erfindungsgemäß bevorzugten Wasch- und Reinigungsmittel für Textilien) enthaltene Mannanase katalysiert im Rahmen ihrer Mannanase-Aktivität die Hydrolyse von 1,4-beta-D-mannosidischen Bindungen in Mannanen, Galactomannanen, Glucomannanen und Galactoglucomannanen. Besagte erfindungsgemäße Mannanase-Enzyme werden gemäß Enzym Nomenklatur als E.C. 3.2.1.78 klassifiziert.

Die Mannanase-Aktivität eines Polypeptids bzw. Enzyms kann gemäß literaturbekannten Testmethoden bestimmt werden. Dabei wird beispielsweise eine Testlösung in Löcher mit 4 mm Durchmesser einer Agarplatte, enthaltend 0,2 Gew.-% AZGL Galactomannan (carob), i.e. Substrat für das endo-1,4-beta-D-Mannanase Essay, erhältlich unter Katalognummer I-AZGMA der Firma Megazyme (http://www.megazyme.com), eingebracht.

Geeignete erfindungsgemäße Zusammensetzungen enthalten beispielsweise die Mannanase, die unter dem Namen Mannaway^{®} von der Firma Novozymes vermarktet wird.

Mannanase-Enzyme wurden in zahlreichen *Bacillus* Organismen identifiziert:
WO 99/64619 offenbart Beispiele für flüssige, proteasehaltige Waschmittelzusammensetzungen mit hohem Gesamttensidgehalt von mindestens 20 Gew.-%, die zusätzlich Mannanase-Enzym umfassen.

Bevorzugterweise enthalten die erfindungsgemäßen Mehrkomponenten-Waschmittel bezogen auf deren Gesamtgewicht Mannanase in einer Gesamtmenge von 0,01 bis 1,0 Gew.-%, insbesondere von 0,02 bis 0,1 Gew.-%.

Besonders bevorzugt, enthält die erfindungsgemäße Zusammensetzung neben der bevorzugten Protease vom Typ der alkalischen Protease aus Bacillus lentus DSM 5483 oder neben der hierzu hinreichend ähnlichen Protease (bezogen auf die Sequenzidentität), die mehrere dieser Veränderungen in Kombination aufweist, zusätzlich mindestens eine α-Amylase.

α-Amylasen (E.C. 3.2.1.1) hydrolysieren als Enzym interne α-1,4-glycosidische Bindungen von Stärke und stärkeähnlichen Polymeren. Diese α-Amylase-Aktivität wird beispielsweise den Anmeldungen WO 97/03160 A1 und GB 1296839 zufolge in KNU (Kilo Novo Units) gemessen. Dabei steht 1 KNU für die Enzymmenge, die 5,25 g Stärke (erhältlich von der Fa. Merck, Darmstadt, Deutschland) pro Stunde bei 37°C, pH 5,6 und in Gegenwart von 0,0043 M Calciumionen hydrolysiert. Eine alternative Aktivitäts-Bestimmungsmethode ist die sogenannte DNS-Methode, die beispielsweise in der Anmeldung WO 02/10356 A2 beschrieben wird. Danach werden die durch das Enzym bei der Hydrolyse von Stärke freigesetzten Oligosaccharide, Disaccharide und Glucoseeinheiten durch Oxidation der reduzierenden Enden mit Dinitrosalicysäure (DNS) nachgewiesen. Die Aktivität wird in µmol reduzierende Zucker (bezogen auf Maltose) pro min und ml erhalten; hierdurch ergeben sich Aktivitätswerte in TAU. Dasselbe Enzym kann über verschiedene Methoden bestimmt werden, wobei die jeweiligen Umrechungsfaktoren je nach Enzym variieren können und somit anhand eines Standards festgelegt werden müssen. Näherungsweise kann man kalkulieren, dass 1 KNU ca. 50 TAU entspricht. Eine weitere Aktivitätsbestimmungsmethode ist die Messung mithilfe des Quick-Start^{®}-Testkits der Fa. Abbott, Abott Park, Illinois, USA.

Ein erfindungsgemäß bevorzugte Einsatzgebiet der erfindungsgemäßen Mehrkomponenten-Waschmittel ist die Reinigung von Textilien. Weil Wasch- und Reinigungsmittel für Textilien überwiegend alkalische pH-Werte aufweisen, werden hierfür insbesondere α-Amylasen eingesetzt, die im alkalischen Medium aktiv sind. Solche werden von Mikroorganismen, das heißt Pilzen oder Bakterien, vor allem denen der Gattungen Aspergillus und Bacillus produziert und sekretiert. Ausgehend von diesen natürlichen Enzymen steht weiterhin eine nahezu unüberschaubare Fülle von Varianten zur Verfügung, die über Mutagenese abgeleitet worden sind und je nach Einsatzgebiet spezifische Vorteile aufweisen.

Beispiele hierfür sind die α-Amylasen aus Bacillus licheniformis, aus B. amyloliquefaciens und aus B. stearothermophilus sowie deren für den Einsatz in Wasch- oder Reinigungsmitteln verbesserte Weiterentwicklungen. Das Enzym aus B. licheniformis ist von der Firma Novozymes unter dem Namen Termamyl^{®} und von der Firma Genencor unter dem Namen Purastar^{®}ST erhältlich. Weiterentwicklungsprodukte dieser α-Amylase sind von der Firma Novozymes unter den Handelsnamen Duramyl^{®} und Termamyl^{®}ultra, von der Firma Genencor unter dem Namen Purastar^{®}OxAm und von der Firma Daiwa Seiko Inc., Tokyo, Japan, als Keistase^{®} erhältlich. Die α-Amylase von B. amyloliquefaciens wird von der Firma Novozymes unter dem Namen BAN^{®} vertrieben, und abgeleitete Varianten von der α-Amylase aus B. stearothermophilus unter den Namen BSG^{®} und Novamyl^{®}, ebenfalls von der Firma Novozymes.

Beispiele für α-Amylasen aus anderen Organismen sind die unter den Handelsnamen Fungamyl^{®} von der Firma Novozymes erhältlichen Weiterentwicklungen der α-Amylase aus Aspergillus niger und A. oryzae. Ein weiteres Handelsprodukt ist beispielsweise die Amylase-LT^{®}.

Zum Stand der Technik gehören unter anderem die drei Patentanmeldungen WO 96/23873 A1, WO 00/60060 A2 und WO 01/66712 A2, die von der Fa. Novozymes angemeldet worden sind. WO 96/23873 A1 beschreibt zum Teil mehrere verschiedene Punktmutationen in insgesamt mehr als 30 verschiedenen Positionen in vier verschiedenen Wildtypamylasen und beansprucht solche für alle Amylasen mit mindestens 80% Identität zu einer dieser vier; sie sollen geänderte enzymatische Eigenschaften hinsichtlich der Thermostabilität, der Oxidationsstabilität und der Calciumabhängigkeit aufweisen. Die Anmeldung WO 00/60060 A2 benennt ebenfalls eine Vielzahl an möglichen Aminosäureaustauschen in 10 verschiedenen Positionen an den α-Amylasen aus zwei verschiedenen Mikroorganismen und beansprucht solche für alle Amylasen mit einer Homologie von mindestens 96% Identität zu diesen. WO 01/66712 A2, schließlich, bezeichnet 31 verschiedene, zum Teil mit den zuvor genannten identische Aminosäurepositionen, die in einer der beiden in der Anmeldung WO 00/60060 A2 genannten α-Amylasen mutiert worden sind.

Aus WO 96/23873 A1 geht beispielsweise konkret die Möglichkeit hervor, in den genannten α-Amylasen ein M in Position 9 gemäß der Zählung von AA560 gegen ein L zu ersetzen, in Position 202 M gegen L und die in den Positionen 182 und 183 (beziehungsweise 183 und 184) liegenden Aminosäuren zu deletieren. WO 00/60060 A2 offenbart unter anderem konkret die Aminosäurevariation N195X (das heißt prinzipiell gegen jede andere Aminosäure).

WO 01/66712 A2 offenbart unter anderem die Aminosäurevariationen R118K, G186X (darunter insbesondere den hier nicht relevanten Austausch G186R), N299X (darunter insbesondere den hier nicht relevanten Austausch N299A), R320K, E345R und R458K.

Ganz besonders bevorzugt, enthält die erfindungsgemäße Zusammensetzung neben der bevorzugten Protease vom Typ der alkalischen Protease aus Bacillus lentus DSM 5483 oder eine hierzu hinreichend ähnliche Protease (bezogen auf die Sequenzidentität), die mehrere dieser Veränderungen in Kombination aufweist, zusätzlich mindestens eine α-Amylase, die bei Temperaturen zwischen 10 und 20°C eine höhere Aktivität aufweist, als die Amylase mit dem Handelsnamen "Stainzyme 12 L" der Firma Novozymes.

Erfindungsgemäß bevorzugte erfindungsgemäße Mehrkomponenten-Waschmittel enthalten bezogen auf deren Gesamtgewicht α-Amylase in einer Gesamtmenge von 0,01 bis 1,0 Gew.-%, insbesondere von 0,02 bis 0,1 Gew.-%.

Es ist bevorzugt, dass mindestens ein optischer Aufheller aus den Substanzklassen der Distyrylbiphenyle, der Stilbene, der 4,4'-Diamino-2,2'-stilbendisulfonsäuren, der Cumarine, der Dihydrochinolinone, der 1,3-Diarylpyrazoline, der Naphthalsäureimide, der Benzoxazol-Systeme, der Benzisoxazol-Systeme, der Benzimidazol-Systeme, der durch Heterocyclen substituierten Pyrenderivate und Mischungen daraus ausgewählt wird. Diese Substanzklassen an optischen Aufhellern weisen eine hohe Stabilität, eine hohe Licht- und Sauerstoffbeständigkeit und eine hohe Affinität zu Fasern auf.

Besonders gut und stabil lassen sich die folgenden optischen Aufheller, welche aus der Gruppe bestehend aus Dinatrium-4,4'-bis-(2-morpholino-4-anilino-s-triazin-6-ylamino)stilbendisulfonat, Dinatrium-2,2'-bis-(phenyl-styryl)disulfonat, 4,4'-Bis[(4-anilino-6-[bis(2-hydroxyethyl)amino]-1,3,5-triazin-2-yl)amino]stilben-2,2'-disulfonsäure, Hexanatrium-2,2'-[vinylenbis[(3-sulphonato-4,1-phenylen)imino[6-(diethylamino)-1,3,5-triazin-4,2-diyl]imino]]bis-(benzol-1,4-disulfonat), 2,2'-(2,5-Thiophendiyl)bis[5-1,1-dimethylethyl)-benzoxazol (beispielsweise erhältlich als Tinopal^{®} SFP von BASF SE) und/oder 2,5-Bis(benzoxazol-2-yl)thiophen ausgewählt sind, einarbeiten.

Das Mehrkomponenten-Waschmittel kann erfindungsgemäß weiterhin Gerüststoffe umfassen. Als Gerüststoffe sind beispielsweise polymere Polycarboxylate geeignet. Dies sind beispielsweise die Alkalimetallsalze der Polyacrylsäure oder der Polymethacrylsäure, zum Beispiel solche mit einer relativen Molekülmasse von 600 bis 750.000 g/mol.

Geeignete Polymere sind insbesondere Polyacrylate, die bevorzugt eine Molekülmasse von 1.000 bis 15.000 g/mol aufweisen. Aufgrund ihrer überlegenen Löslichkeit können aus dieser Gruppe wiederum die kurzkettigen Polyacrylate, die Molmassen von 1.000 bis 10.000 g/mol, und besonders bevorzugt von 1.000 bis 5.000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Zur Verbesserung der Wasserlöslichkeit können die Polymere auch Allylsulfonsäuren, wie Allyloxybenzolsulfonsäure und Methallylsulfonsäure, als Monomer enthalten.

Als Gerüststoffe, die in der erfindungsgemäßen Zusammensetzung enthalten sein können, sind insbesondere auch Silikate, Aluminiumsilikate (insbesondere Zeolithe), Carbonate, Salze organischer Di- und Polycarbonsäuren sowie Mischungen dieser Stoffe zu nennen. Als zusätzliche Gerüststoffe sind insbesondere organische Gerüststoffe geeignet, beispielsweise die in Form ihrer Natriumsalze oder auch als Säuren einsetzbaren Polycarbonsäuren, wobei unter Polycarbonsäuren solche Carbonsäuren verstanden werden, die mehr als eine Säurefunktion tragen. Beispielsweise sind dies Adipinsäure, Bernsteinsäure, Glutarsäure, Äpfelsäure, Weinsäure, Maleinsäure, Fumarsäure, Zuckersäuren, Aminocarbonsäuren, insbesondere Glutaminsäure-N,N-Diessigsäure (GLDA) und Methylglycin-N,N-Diessigsäure (MGDA), sowie Mischungen aus diesen. Als Gerüststoffe sind weiter polymere Polycarboxylate geeignet. Dies sind beispielsweise die Alkalimetallsalze der Polyacrylsäure oder der Polymethacrylsäure, zum Beispiel solche mit einer relativen Molekülmasse von 600 bis 750.000 g/mol. Geeignete Polymere sind insbesondere Polyacrylate, die bevorzugt eine Molekülmasse von 1.000 bis 15.000 g/mol aufweisen. Aufgrund ihrer überlegenen Löslichkeit können aus dieser Gruppe wiederum die kurzkettigen Polyacrylate, die Molmassen von 1.000 bis 10.000 g/mol, und besonders bevorzugt von 1.000 bis 5.000 g/mol, aufweisen, bevorzugt sein. Geeignet sind weiterhin copolymere Polycarboxylate, insbesondere solche der Acrylsäure mit Methacrylsäure und der Acrylsäure oder Methacrylsäure mit Maleinsäure. Zur Verbesserung der Wasserlöslichkeit können die Polymere auch Allylsulfonsäuren, wie Allyloxybenzolsulfonsäure und Methallylsulfonsäure, als Monomer enthalten.

In flüssigen Komponenten werden bevorzugt lösliche Gerüststoffe, wie Acrylpolymere mit einer Molmasse von 1.000 bis 5.000 g/mol eingesetzt.

Besonders bevorzugt werden allerdings lösliche Gerüststoffe, wie beispielsweise Zitronensäure, oder Acryl-polymere mit einer Molmassen von 1.000 bis 5.000 g/mol eingesetzt.

Die flüssigen Komponenten enthalten bevorzugt weiterhin zusätzlich ein oder mehrere nichtwässrige Lösemittel. Geeignete nichtwässrige Lösungsmittel umfassen ein- oder mehrwertige Alkohole oder Glykolether, wie beispielsweise Ethanol, n-Propanol, i-Propanol, Butanolen, Glykol, Propandiol, Butandiol, Methylpropandiol, Glycerin, Glykolen, wie Diglykol, Propyldiglycol, Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropylenglykolmonoethylether, Methoxytriglykol, Ethoxytriglykol, Butoxytriglykol, 1-Butoxyethoxy-2-propanol, 3-Methyl-3-methoxybutanol, 2,2-dimethyl-4-hydroxymethyl-1,3-dioxolan, Propylen-glykol-t-butylether, Di-n-octylether sowie niedermolekularen Polyalkylenglykolen, wie PEG 400, sowie Mischungen dieser Lösungsmittel.

Vorzugsweise werden die Lösungsmittel ausgewählt aus Ethanol, n-Propanol, i-Propanol, Butanolen, Glykol, Propandiol, Butandiol, Methylpropandiol, Glycerin, Diglykol, Propyldiglycol, Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropy-lenglykolmonoethylether, Methoxytriglykol, Ethoxytriglykol, Butoxytriglykol, 1-Butoxyethoxy-2-propanol, 3-Methyl-3-methoxybutanol, Propylen-glykol-t-butylether, Di-n-octylether sowie Mischungen dieser Lösungsmittel.

Zusätzlich können die erfindungsgemäßen Mehrkomponenten-Waschmittel zusätzlich auch Komponenten enthalten, welche die ÖI- und Fettauswaschbarkeit aus Textilien positiv beeinflussen, sogenannte soil release-Wirkstoffe. Dieser Effekt wird besonders deutlich, wenn ein Textil verschmutzt wird, das bereits vorher mehrfach mit einem Mittel, das diese öl- und fettlösende Komponente enthält, gewaschen wurde. Zu den bevorzugten öl- und fettlösenden Komponenten zählen beispielsweise nicht-ionische Celluloseether wie Methylcellulose und Methylhydroxypropylcellulose mit einem Anteil an Methoxyl-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten mit monomeren und/oder polymeren

Diolen, insbesondere Polymere aus Ethylenterephthalaten und/oder Polyethylenglykolterephthalaten oder anionisch und/oder nichtionisch modifizierten Derivaten von diesen. Solche sind beispielsweise unter dem Handelsnamen Texcare^{®} kommerziell erhältlich.

Als Antiredepositionsmittel sind insbesondere auf (Co)Polymere auf Basis von Polyethylenimin, Polyvinylacetat und Polyethylenglykol einsetzbar, bevorzugt in Mischungen mit Antiredepositionsmitteln.

Das Mehrkomponenten-Waschmittel kann bevorzugt auch Farbübertragungsinhibitoren, vorzugsweise in Mengen von 0,1 Gew.-% bis 2 Gew.-%, insbesondere 0,1 Gew.-% bis 1 Gew.-%, enthalten, die in einer bevorzugten Ausgestaltung der Erfindung Polymere aus Vinylpyrrolidon, Vinylimidazol, Vinylpyridin-N-Oxid oder Copolymere aus diesen sind.

Vergrauungsinhibitoren haben die Aufgabe, den von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt können Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf das Mehrkomponenten-Waschmittel, eingesetzt werden.

Es ist bevorzugt, dass der Farbübertragungsinhibitor ein Polymer oder Copolymer von cyclischen Aminen wie beispielsweise Vinylpyrrolidon und/oder Vinylimidazol ist. Als Farbübertragungsinhibitor geeignete Polymere umfassen Polyvinylpyrrolidon (PVP), Polyvinylimidazol (PVI), Copolymere von Vinylpyrrolidon und Vinylimidazol (PVP/PVI), Polyvinylpyridin-N-oxid, Poly-N-carboxymethyl-4-vinylpyridiumchlorid, Polyethylenglycolmodifizierte Copolymere von Vinylpyrrolidon und Vinylimidazol sowie Mischungen daraus. Besonders bevorzugt werden Polyvinylpyrrolidon (PVP), Polyvinylimidazol (PVI) oder Copolymere von Vinylpyrrolidon und Vinylimidazol (PVP/PVI) als Farbübertragungsinhibitor eingesetzt. Die eingesetzten Polyvinylpyrrolidone (PVP) besitzen bevorzugt ein mittleres Molekular gewicht von 2.500 bis 400.000 und sind kommerziell von ISP Chemicals als PVP K 15, PVP K 30, PVP K 60 oder PVP K 90 oder von der BASF als Sokalan^{®} HP 50 oder Sokalan^{®} HP 53 erhältlich. Die eingesetzten Copolymere von Vinylpyrrolidon und Vinylimidazol (PVP/PVI) weisen vorzugsweise ein Molekulargewicht im Bereich von 5.000 bis 100.000 g/mol auf. Kommerziell erhältlich ist ein PVP/PVI-Copolymer beispielsweise von der BASF unter der Bezeichnung Sokalan^{®} HP 56. Ein weiterer äußerst bevorzugt einsetzbarer Farbübertragungsinhibitor sind Polyethylenglycolmodifizierte Copolymere von Vinylpyrrolidon und Vinylimidazol, welche beispielsweise unter der Bezeichnung Sokalan^{®} HP 66 von der BASF erhältlich sind.

Die mindestens eine flüssige Zusammensetzung des erfindungsgemäßen Mehrkomponenten-Waschmittels ist bevorzugt transparent oder transluzent. Weist eine erfindungsgemäße flüssige Zusammensetzung im spektralen Bereich zwischen 380 nm und 780 nm eine auf die Referenzmessung bezogene rest-Lichtleistung (Transmission) von mindestens 20 % auf, gilt sie als transparent im Sinne der Erfindung.

Die Transparenz der erfindungsgemäßen flüssigen Zusammensetzung kann mit verschiedenen Methoden ermittelt werden. Die Nephelometric Turbidity Unit (Nephelometrischer Trübungswert; NTU) wird häufig als Messwert für Transparenz herangezogen. Sie ist eine z.B. in der Wasseraufbereitung verwendete Einheit für Trübungsmessungen z.B. in Flüssigkeiten. Sie ist die Einheit einer mit einem kalibrierten Nephelometer gemessenen Trübung. Hohe NTU-Werte werden für getrübte Zusammensetzungen gemessen, wogegen niedrige Werte für klare, transparente Zusammensetzungen bestimmt werden.

Der Einsatz des Turbidimeters vom Typ HACH Turbidimeter 2100Q der Fa. Hach Company, Loveland, Colorado (USA) erfolgt dabei unter Verwendung der Kalibriersusbstanzen StablCal Solution HACH (20 NTU), StablCal Solution HACH (100 NTU) und StablCal Solution HACH (800 NTU), alle können ebenfalls von der Firma Hach Company bestellt werden. Die Messung wird in einer 10 ml Messküvette mit Kappe mit der zu untersuchenden Zusammensetzung befüllt und die Messung bei 20 °C durchgeführt.

Bei einem NTU-Wert (bei 20°C) von 60 oder mehr weisen flüssige Zusammensetzungen mit dem bloßen Auge erkennbar im Sinne der Erfindung eine wahrnehmbare Trübung auf. Daher ist es bevorzugt, wenn die erfindungsgemäßen flüssigen Zusammensetzungen einen NTU-Wert (bei 20°C) von höchstens 120, bevorzugter höchstens 110, bevorzugter höchstens 100, besonders bevorzugt von höchstens 80, aufweisen.

Im Rahmen der vorliegenden Erfindung wurde die Transparenz der erfindungsgemäßen Waschmittel durch eine Transmissionsmessung im visuellen Lichtspektrum über einen Wellenlängenbereich von 380 nm bis 780 nm bei 20°C bestimmt. Dazu wird zunächst eine Referenzprobe (Wasser, vollentsalzt) in einem Photometer (Fa. Specord S 600 von AnalytikJena) mit einer im zu untersuchendem Spektrum transparenten Küvette (Schichtdicke 10 mm) vermessen. Anschließend wird die Küvette mit einer Probe der erfindungsgemäßen flüssigen Zusammensetzung befüllt und abermals vermessen.

Es ist bevorzugt, wenn die erfindungsgemäße transparente flüssige Zusammensetzung eine Transmission (20°C) von bevorzugter mindestens 25 %, bevorzugter mindestens 30%, bevorzugter mindestens 40 %, insbesondere von mindestens 50 %, besonders bevorzugt von mindestens 60 %, aufweist.

Es ist ganz besonders bevorzugt, wenn die erfindungsgemäße transparente flüssige Zusammensetzung eine Transmission (bei 20°C) von mindestens 30 % (insbesondere von mindestens 40 % bevorzugter von mindestens 50 %, besonders bevorzugt von mindestens 60 %) und einen NTU-Wert (bei 20°C) von höchstens 120 (bevorzugter höchstens 110, bevorzugter höchstens 100, besonders bevorzugt von höchstens 80) aufweist.

Das Mehrkomponenten-Waschmittel wird insbesondere im Rahmen eines Waschprozesses für Textilien eingesetzt. Die hierin beschriebenen Zusammensetzungen eignen sich einerseits als Waschhilfsmittel, die als Textilvor- und Nachbehandlungsmittel bei der Textilwäsche verwendet werden, also als solche Mittel, mit denen das Wäschestück vor der eigentlichen Wäsche in Kontakt gebracht wird, beispielsweise zum Anlösen hartnäckiger Verschmutzungen.

Eine tensidhaltige Flotte ist im Sinne der Erfindung eine durch Einsatz des Mehrkomponenten-Waschmittels der vorliegenden Erfindung unter Verdünnung mit mindestens einem Lösemittel (bevorzugt Wasser) erhältliche, flüssige Zubereitung für die Behandlung eines Substrats. Als Substrat kommen Gewebe oder Textilien (wie z.B. Kleidung) in Frage. Bevorzugt werden die erfindungsgemäßen Zusammensetzungen zur Bereitstellung einer tensidhaltigen Flotte im Rahmen maschineller Reinigungsverfahren verwendet, wie sie z.B. von einer Waschmaschine für Textilien ausgeführt werden.

Die weiteren Komponenten des Mehrkomponenten-Waschmittels können in jeder nach dem Stand der Technik etablierten und/oder jeder zweckmäßigen Darreichungsform vorliegen. Dazu zählen beispielsweise flüssige, gelförmige oder pastöse Darreichungsformen. Der Behälter ist bevorzugt ein Pouch mit zwei, drei, vier, fünf, sechs, sieben oder acht Kammern, sowohl in Großgebinden als auch portionsweise abgepackt. Dabei können zusätzlich zu den Komponenten K1 und K2 auch mindestens eine festförmige Zusammensetzung als dritte Komponente K3 enthalten sein.

Es ist aber erfindungsgemäß ganz besonders bevorzugt, wenn das Mehrkomponenten-Waschmittel ausschließlich flüssige Komponenten umfasst, wobei die flüssigen Komponenten bevorzugt von einer Umhüllung getrennt voneinander konfektioniert sind.

Bei dem Mehrkomponenten-Waschmittel handelt es sich in einer weiteren besonders bevorzugten Ausführungsform um ein Mehrkomponenten-Color-Waschmittel, insbesondere ein flüssiges, also ein Textilwaschmittel für gefärbte Textilien.

Der Behälter kann ein für einen Waschgang vorgefertigten Portion (z.B. als wasserlöslichen Mehrkammerpouch) oder ein Mehrkammer-Vorratsgebinde mit eventueller Mischkammer sein.

Erfindungsgemäß bevorzugt befindet sich die, insbesondere flüssige, Zusammensetzung in einem Behälter (Pouch) aus wasserlöslichem Material. Der Behälter für das besagte Mehrkomponenten-Waschmittel umfasst mindestens zwei Kammern (Mehrkammerpouch), beispielsweise 2, 3, 4, 5, 6, 7 oder 8 Kammern. Diese Kammern sind derart voneinander getrennt, dass die enthaltenen flüssigen oder flüssigen und festen Komponenten des Waschmittels nicht miteinander in Kontakt treten. Diese Trennung kann beispielsweise durch eine Wand erfolgen, die aus demselben Material besteht wie der Behälter selbst.

Es ist daher erfindungsgemäß besonders bevorzugt, das Mehrkomponenten-Waschmittel, in einem Behälter aus wasserlöslichem Material, insbesondere aus wasserlöslicher Folie, mit mindestens zwei voneinander getrennten Kammern zu konfektionieren, wobei sich in wenigstens einer Kammer Komponente K1 und in wenigstens einer hiervon verschiedenen Kammer die Komponente K2 befinden.

Wasserlöslich im Sinne der vorliegenden Erfindung ist ein Material, wenn sich bei 20°C 0,1 g des Materials unter Rühren (Rührgeschwindigkeit Magnetrührer 300 rpm, Rührstab: 6,8 cm lang, Durchmesser 10 mm, Becherglas 1000mL niedrige Form der Fa. Schott, Mainz) innerhalb von 600 Sekunden derart in 800 mL Wasser auflöst, dass mit dem bloßen Auge keine einzelnen festförmigen Partikel des Materials mehr sichtbar sind.

Die Wasserlöslichkeit des für die Herstellung von Pouches zur Umhüllung genutzten Materials in Form eines Films kann mit Hilfe eines in einem quadratischen Rahmen (Kantenlänge auf der Innenseite: 20 mm) fixierten quadratischen Films des besagten Materials (Film: 22 x 22 mm mit einer Dicke von 76 µm) nach folgendem Messprotokoll bestimmt werden. Besagter gerahmter Film wird in 800 mL auf 20 °C temperiertes, destilliertes Wasser in einem 1 Liter Becherglas mit kreisförmiger Bodenfläche (Fa. Schott, Mainz, Becherglas 1000 mL, niedrige Form) eingetaucht, so dass die Fläche des eingespannten Films im rechten Winkel zur Bodenfläche des Becherglases angeordnet ist, die Oberkante des Rahmens 1 cm unter der Wasseroberfläche ist und die Unterkante des Rahmens parallel zur Bodenfläche des Becherglases derart ausgerichtet ist, dass die Unterkante des Rahmens entlang des Radius der Bodenfläche des Becherglases verläuft und die Mitte der Unterkante des Rahmens über der Mitte des Radius des Becherglasbodens angeordnet ist. Das Material sollte sich unter Rühren (Rührgeschwindigkeit Magnetrührer 300 rpm, Rührstab: 6,8 cm lang, Durchmesser 10 mm) innerhalb von 600 Sekunden derart auflösen, dass mit dem bloßen Auge keine einzelnen festförmigen Folienpartikel mehr sichtbar sind.

Das wasserlösliche oder wasserdispergierbare Material kann ein Polymer, ein Copolymer oder Mischungen dieser umfassen. Wasserlösliche Polymere im Sinne der Erfindung sind solche Polymere, die bei Raumtemperatur in Wasser zu mehr als 2,5 Gew.-% löslich sind.

Bevorzugte wasserlösliche Materialien umfassen vorzugsweise mindestens anteilsweise wenigstens eine Substanz aus der Gruppe bestehend aus (acetalisierter) Polyvinylalkohol, Polyvinylpyrrolidon, Polyethylenoxid, Gelatine, mit Sulphat, Carbonat und/oder Citrat substituierte Polyvinylalkohole, Polyalkylenoxide, Acrylamide, Celluloseester, Celluloseether, Celluloseamide, Cellulose, Polyvinylacetate, Polycarbonsäuren und deren Salze, Polyaminosäuren oder Peptide, Polyamide, Polyacrylamide, Copolymere von Maleinsäure und Acrylsäure, Copolymere von Acrylamiden und (Meth)Acrylsäure, Polysaccaride, wie beispielsweise Stärke oder Guar-Derivate, Gelatine und unter den INCI Bezeichnungn Polyquaternium 2, Polyquaternium 17, Polyquaternium 18 und Polyquaternium 27 auf. Besonders bevorzugt ist das wasserlösliche Material ein Polivinylalkohol.

In einer Ausführungsform der Erfindung umfasst das wasserlösliche Material Mischungen unterschiedlicher Substanzen. Solche Mischungen ermöglichen die Einstellung der mechanischen Eigenschaften des Behälters und können den Grad der Wasserlöslichkeit beeinflussen.

Das wasserlösliche Material enthält bevorzugt mindestens einen Polyvinylalkohol und/oder mindestens ein Polyvinylalkoholcopolymer. "Polyvinylalkohol" (Kurzzeichen PVAL oder PVA gelegentlich auch PVOH) ist dabei die Bezeichnung für Polymere der allgemeinen Struktur 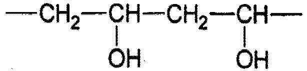 die in geringen Anteilen (ca. 2%) auch Struktureinheiten des Typs 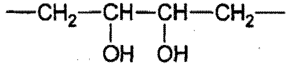 enthalten.

Handelsübliche Polyvinylalkohole, die als weiß-gelbliche Pulver oder Granulate mit Polymerisationsgraden im Bereich von ca. 100 bis 2500 (Molmassen von ca. 4000 bis 100.000 g/mol) angeboten werden, haben Hydrolysegrade von 98 bis 99 Mol-% beziehungsweise 87 bis 89 Mol-%, enthalten also noch einen Restgehalt an Acetyl-Gruppen. Charakterisiert werden die Polyvinylalkohole von Seiten der Hersteller durch Angabe des Polymerisationsgrades des Ausgangspolymeren, des Hydrolysegrades, der Verseifungszahl beziehungsweise der Lösungsviskosität.

Polyvinylalkohole sind abhängig vom Hydrolysegrad löslich in Wasser und wenigen stark polaren organischen Lösungsmitteln (Formamid, Dimethylformamid, Dimethylsulfoxid); von (chlorierten) Kohlenwasserstoffen, Estern, Fetten und Ölen werden sie nicht angegriffen. Polyvinylalkohole werden als toxikologisch unbedenklich eingestuft und sind biologisch zumindest teilweise abbaubar. Die Wasserlöslichkeit kann man durch Nachbehandlung mit Aldehyden (Acetalisierung), durch Komplexierung mit Ni- oder Cu-Salzen oder durch Behandlung mit Dichromaten, Borsäure od. Borax verringern. Die Beschichtungen aus Polyvinylalkohol sind weitgehend undurchdringlich für Gase wie Sauerstoff, Stickstoff, Helium, Wasserstoff, Kohlendioxid, lassen jedoch Wasserdampf hindurchtreten.

Im Rahmen der vorliegenden Erfindung ist es bevorzugt, dass das wasserlösliche Material wenigstens anteilsweise einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% beträgt. In einer bevorzugten Ausführungsform besteht das wasserlösliche Material zu mindestens 20 Gew.-%, besonders bevorzugt zu mindestens 40 Gew.-%, ganz besonders bevorzugt zu mindestens 60 Gew.-% und insbesondere zu mindestens 80 Gew.-% aus einem Polyvinylalkohol, dessen Hydrolysegrad 70 bis 100 Mol-%, vorzugsweise 80 bis 90 Mol%, besonders bevorzugt 81 bis 89 Mol-% und insbesondere 82 bis 88 Mol% beträgt.

Die vorstehend beschriebenen Polyvinylalkohole sind kommerziell breit verfügbar, beispielsweise unter dem Warenzeichen Mowiol^{®} (Clariant). Im Rahmen der vorliegenden Erfindung besonders geeignete Polyvinylalkohole sind beispielsweise Mowiole 3-83, Mowiol^{®} 4-88, Mowiol^{®} 5-88, Mowiol^{®} 8-88 sowie L648, L734, Mowiflex LPTC 221 ex KSE sowie die Compounds der Firma Texas Polymers wie beispielsweise Vinex 2034.

Bevorzugte Polyvinylalkoholcopolymere umfassen neben Vinylalkohol Dicarbonsäuren als weitere Monomere. Geeignete Dicarbonsäure sind Itaconsäure, Malonsäure, Bernsteinsäure und Mischungen daraus, wobei Itaconsäure bevorzugt ist.

Ebenso bevorzugte Polyvinylalkoholcopolymere umfassen neben Vinylalkohol eine ethylenisch ungesättige Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Die Wasserlöslichkeit von Polyvinylalkoholpolymer kann durch Nachbehandlung mit Aldehyden (Acetalisierung) oder Ketonen (Ketalisierung) verändert werden. Als besonders bevorzugt und aufgrund ihrer ausgesprochen guten Kaltwasserlöslichkeit besonders vorteilhaft haben sich hierbei Polyvinylalkohole herausgestellt, die mit den Aldehyd beziehungsweise Ketogruppen von Sacchariden oder Polysacchariden oder Mischungen hiervon acetalisiert beziehungsweise ketalisiert werden.

Weiterhin lässt sich die Wasserlöslichkeit durch Komplexierung mit Ni- oder Cu-Salzen oder durch Behandlung mit Dichromaten, Borsäure, Borax verändern und so gezielt auf gewünschte Werte einstellen. Bevorzugt sind diese nicht enthalten. Folien aus PVAL sind weitgehend undurchdringlich für Gase wie Sauerstoff, Stickstoff, Helium, Wasserstoff, Kohlendioxid, lassen jedoch Wasserdampf hindurchtreten.

Dem als wasserlösliches Material geeigneten Folienmaterial kann neben Polyvinylalkohol zusätzlich Polymere, ausgewählt aus der Gruppe umfassend Acrylsäure-haltige Polymere, Polyacrylamide, Oxazolin-Polymere, Polystyrolsulfonate, Polyurethane, Polyester, Polyether Polymilchsäure, und/oder Mischungen der vorstehenden Polymere, zugesetzt sein.

Geeignete wasserlösliche Folien zum Einsatz als wasserlösliches Material der wasserlöslichen Portion gemäß der Erfindung sind Folien, die unter der Bezeichnung Monosol M8630 oder M8720 von MonoSol LLC vertrieben werden. Andere geeignete Folien umfassen Folien mit der Bezeichnung Solublon^{®} PT, Solublon^{®} KA, Solublon^{®} KC oder Solublon^{®} KL von der Aicello Chemical Europe GmbH oder die Folien VF-HP von Kuraray.

Bevorzugte wasserlösliche Materialien sind dadurch gekennzeichnet, dass sie Hydroxypropylmethylcellulose (HPMC) umfassen, die einen Substitutionsgrad (durchschnittliche Anzahl von Methoxygruppen pro Anhydroglucose-Einheit der Cellulose) von 1,0 bis 2,0, vorzugsweise von 1,4 bis 1,9, und eine molare Substitution (durchschnittliche Anzahl von Hydroxypropoxylgruppen pro Anhydroglucose-Einheit der Cellulose) von 0,1 bis 0,3, vorzugsweise von 0,15 bis 0,25, aufweist.

Polyvinylpyrrolidone, kurz als PVP bezeichnet, werden durch radikalische Polymerisation von 1-Vinylpyrrolidon hergestellt. Handelsübliche PVP haben Molmassen im Bereich von ca. 2.500 bis 750.000 g/mol und werden als weiße, hygroskopische Pulver oder als wässrige Lösungen angeboten.

Polyethylenoxide, kurz PEOX, sind Polyalkylenglykole der allgemeinen Formel

H-[O-CH₂-CH₂]ₙ-OH

die technisch durch basisch katalysierte Polyaddition von Ethylenoxid (Oxiran) in meist geringe Mengen Wasser enthaltenden Systemen mit Ethylenglykol als Startmolekül hergestellt werden. Sie haben üblicherweise Molmassen im Bereich von ca. 200 bis 5.000.000 g/mol, entsprechend

Polymerisationsgraden n von ca. 5 bis >100.000. Polyethylenoxide besitzen eine äußerst niedrige Konzentration an reaktiven Hydroxy-Endgruppen und zeigen nur noch schwache Glykol-Eigenschaften.

Gelatine ist ein Polypeptid (Molmasse: ca. 15.000 bis >250.000 g/mol), das vornehmlich durch Hydrolyse des in Haut und Knochen von Tieren enthaltenen Kollagens unter sauren oder alkalischen Bedingungen gewonnen wird. Die Aminosäuren-Zusammensetzung der Gelatine entspricht weitgehend der des Kollagens, aus dem sie gewonnen wurde, und variiert in Abhängigkeit von dessen Provenienz. Die Verwendung von Gelatine als wasserlösliches Hüllmaterial ist insbesondere in der Pharmazie in Form von Hart- oder Weichgelatinekapseln äußerst weit verbreitet. In Form von Folien findet Gelatine wegen ihres im Vergleich zu den vorstehend genannten Polymeren hohen Preises nur geringe Verwendung.

Bevorzugt sind im Rahmen der vorliegenden Erfindung wasserlösliche Materialien, welche ein Polymer aus der Gruppe Stärke und Stärkederivate, Cellulose und Cellulosederivate, insbesondere Methylcellulose und Mischungen hieraus umfassen.

Stärke ist ein Homoglykan, wobei die Glucose-Einheiten α-glykosidisch verknüpft sind. Stärke ist aus zwei Komponenten unterschiedlichen Molekulargewichts (MG) aufgebaut: aus ca. 20 bis 30% geradkettiger Amylose (MG ca. 50.000 bis 150.000 g/mol) und 70 bis 80% verzweigtkettigem Amylopektin (MG ca. 300.000 bis 2.000.000 g/mol). Daneben sind noch geringe Mengen Lipide, Phosphorsäure und Kationen enthalten. Während die Amylose infolge der Bindung in 1,4-Stellung lange, schraubenförmige, verschlungene Ketten mit etwa 300 bis 1.200 Glucose-Molekülen bildet, verzweigt sich die Kette beim Amylopektin nach durchschnittlich 25 Glucose-Bausteinen durch 1,6-Bindung zu einem astähnlichen Gebilde mit etwa 1.500 bis 12.000 Molekülen Glucose. Neben reiner Stärke sind zur Herstellung wasserlöslicher Behälter im Rahmen der vorliegenden Erfindung auch Stärke-Derivate geeignet, die durch polymeranaloge Reaktionen aus Stärke erhältlich sind. Solche chemisch modifizierten Stärken umfassen dabei beispielsweise Produkte aus Veresterungen beziehungsweise Veretherungen, in denen Hydroxy-Wasserstoffatome substituiert wurden. Aber auch Stärken, in denen die Hydroxy-Gruppen gegen funktionelle Gruppen, die nicht über ein Sauerstoffatom gebunden sind, ersetzt wurden, lassen sich als Stärke-Derivate einsetzen. In die Gruppe der Stärke-Derivate fallen beispielsweise Alkalistärken, Carboxymethylstärke (CMS), Stärkeester und -ether sowie Aminostärken.

Reine Cellulose weist die formale Bruttozusammensetzung (C₆H₁₀O₅), auf und stellt formal betrachtet ein β-1,4-Polyacetal von Cellobiose dar, die ihrerseits aus zwei Molekülen Glucose aufgebaut ist. Geeignete Cellulosen bestehen dabei aus ca. 500 bis 5.000 Glucose-Einheiten und haben demzufolge durchschnittliche Molmassen von 50.000 bis 500.000 g/mol. Als Desintegrationsmittel auf Cellulosebasis verwendbar sind im Rahmen der vorliegenden Erfindung auch Cellulose-Derivate, die durch polymeranaloge Reaktionen aus Cellulose erhältlich sind. Solche chemisch modifizierten Cellulosen umfassen dabei beispielsweise Produkte aus Veresterungen beziehungsweise Veretherungen, in denen Hydroxy-Wasserstoffatome substituiert wurden. Aber auch Cellulosen, in denen die Hydroxy-Gruppen gegen funktionelle Gruppen, die nicht über ein Sauerstoffatom gebunden sind, ersetzt wurden, lassen sich als Cellulose-Derivate einsetzen. In die Gruppe der Cellulose-Derivate fallen beispielsweise Alkalicellulosen, Carboxymethylcellulose (CMC), Celluloseester und -ether sowie Aminocellulosen.

Das wasserlösliche Material kann weitere Additive aufweisen. Hierbei handelt es sich beispielsweise um Weichmacher, wie beispielsweise Dipropylenglycol, Ethylenglycol oder Diethylenglycol, Wasser oder Aufschlussmittel.

Besonders bevorzugt wird Polyvinylalkohol als wasserlösliches Material eingesetzt. Dieses ist einerseits leicht zu verarbeiten und kostengünstig zu erhalten. Zudem ist es besonders gut in Wasser löslich und ermöglicht so vielfältige Einsatzmöglichkeiten des hergestellten Behälters.

Mehrkomponenten-Waschmittel, in einem Behälter aus wasserlöslichem Material, insbesondere aus wasserlöslicher Folie, mit mindestens zwei voneinander getrennten Kammern zu konfektionieren, wobei sich in wenigstens einer Kammer Komponente K1 und in wenigstens einer hiervon verschiedenen Kammer die Komponente K2 befinden.

Demnach sind solche Mehrkomponenten-Waschmittel bevorzugt, die mindestens zwei Komponenten umfassen und welche in einem Behälter aus wasserlöslichem Material, insbesondere aus wasserlöslicher Folie (insbesondere enthaltend Polyvinylalkohol oder ein Polyvinylalkoholcopolymer), mit mindestens zwei voneinander getrennten Kammern enthalten sind, wobei
eine erste Komponente K1 eine erste flüssige Zusammensetzung ist, enthaltend
   - mindestens eine Catechol-Metallkomplexverbindung der Formel (I) 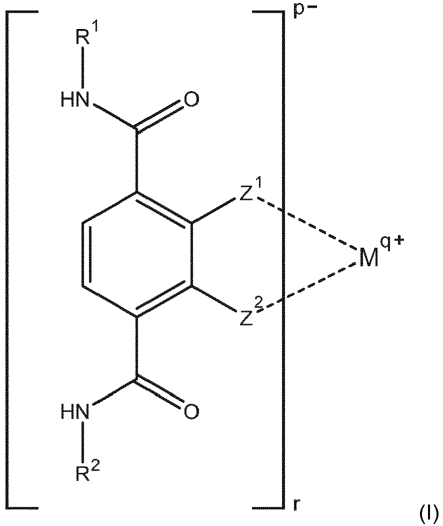 wobei
      - R¹ und R²: unabhängig voneinander für einen Kohlenwasserstoffrest mit 1 bis 20 Kohlenstoffatomen stehen, der gegebenenfalls mit mindestens einem Rest substituiert ist, ausgewählt aus Hydroxy, (C₁-C₄)-Alkoxy, (C₁-C₄)-Alkoxy(CH₂CH₂O)ₙ-, -NR'R" oder -N⁺R'R'R‴X⁻, wobei n = 1 bis 10, R', R" und R‴ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen,
      - Z¹ und Z²: unabhängig voneinander für OH oder O⁻ stehen,
      - M: steht für ein Metallkation eines Übergangsmetalls oder Lanthanoids, (insbesondere für ein Metallkation aus Ti, Zr, Hf, V, Nb, Ta, Cr. Mo, W, Mn, Fe, Ru, Co, Ni, Cu, Zn, Ce oder Sm),
      - q: als Ladungszahl des Metallkations M für eine Zahl 2, 3 oder 4 steht,
      - p: als Ladungszahl des Catecholliganden für eine Zahl 0, 1 oder 2 steht,
      - r: für eine Zahl 1, 2, 3 oder 4 steht, und
   - mindestens eine freie Catecholverbindung der Formel (II) oder deren Salz 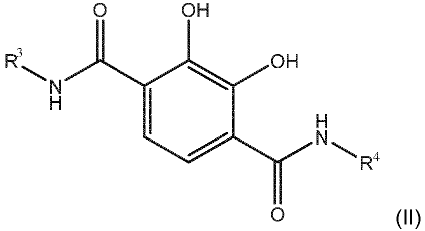 wobei
      - R³ und R⁴: unabhängig voneinander für einen Kohlenwasserstoffrest mit 1 bis 20 Kohlenstoffatomen stehen, der gegebenenfalls mit mindestens einem Rest substituiert ist, ausgewählt aus Hydroxy, (C₁-C₄)-Alkoxy, (C₁-C₄)-Alkoxy(CH₂CH₂O)ₙ-, -NR'R" oder -N⁺R'R"R‴X⁻, wobei n = 1 bis 10, R', R" und R‴ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen,
      mit der Maßgabe, dass die Catecholverbindung der Formel (II) und deren Salz von Verbindungen der Formel (I) verschieden sind,
und eine zweite Komponente K2 eine zweite flüssige Zusammensetzung ist, enthaltend mindestens ein Tensid. Dabei ist es wiederum bevorzugt, wenn die zweite Komponente K2 und gegebenenfalls vorhandene zusätzliche Komponenten des Mehrkomponenten-Waschmittels dieser Ausführungsform im Wesentlichen frei sind von Verbindungen der Formel (I) und Verbindungen der Formel (II).

Die zuvor beschriebenen bevorzugten Ausführungsformen der Komponente K1 und/oder der Komponente K2 und/oder des wasserlöslichen Materials des Behälters gelten hierbei ebenso als bevorzugt.

Davon unabhängig ist es erfindungsgemäß bevorzugt, wenn in dem Mehrkomponenten-Waschmittel zur Erhöhung der Produktsicherheit mindestens ein Bittermittel enthalten ist. Dabei ist es bevorzugt, wenn das Bittermittel in Komponente K1 und/oder in Komponente K2 und/oder in dem wasserlöslichen Material des Behälters, insbesondere in der wasserlöslichen Folie, enthalten ist.

Bevorzugte Bittermittel weisen einen Bitterwert von mindestens 1.000, bevorzugt mindestens 10.000, besonders bevorzugt mindestens 200.000 auf. Zur Bestimmung des Bitterwertes wird das im Europäischen Arzneibuch (5. Ausgabe Grundwerk, Stuttgart 2005, Band 1 Allgemeiner Teil Monografiegruppen, 2.8.15 Bitterwert S. 278) beschriebene standardisierte Verfahren verwendet. Als Vergleich dient eine wässrige Lösung von Chininhydrochlorid, dessen Bitterwert mit 200.000 festgelegt ist. Dies bedeutet, dass 1 Gramm Chininhydrochlorid 200 Liter Wasser bitter macht. Die interindividuellen Geschmacksunterschiede bei der organoleptischen Prüfung der Bitterkeit werden bei diesem Verfahren durch einen Korrekturfaktor ausgeglichen.

Ganz besonders bevorzugte Bittermittel werden ausgewählt aus Denatoniumbenzoat, Glycosiden, Isoprenoiden, Alkaloiden, Aminosäuren und Mischungen daraus, besonders bevorzugt Denatoniumbenzoat.

Glycoside sind organische Verbindungen der allgemeinen Struktur R-O-Z, bei denen ein Alkohol (R-OH) über eine glycosidische Bindung mit einem Zuckerteil (Z) verbunden ist.

Geeignete Glycoside sind beispielsweise Flavonoide wie Quercetin oder Naringin oder Iridoidglycoside wie Aucubin und insbesondere Secoiridoid, wie Amarogentin, Dihydrofoliamentin, Gentiopikrosid, Gentiopikrin, Swertiamarin, Swerosid, Gentioflavosid, Centaurosid, Methiafolin, Harpagosid und Centapikrin, Sailicin oder Kondurangin.

Isoprenoide sind Verbindungen, die sich formal von Isopren ableiten. Beispiele sind insbesondere Terpene und Terpenoide.

Geeignete Isoprenoide umfassen beispielsweise Sequiterpenlactone wie Absinthin, Artabsin, Cnicin, Lactucin, Lactucopikrin oder Salonitenolid, Monoterpen-Ketone (Thujone) wie beispielsweise α-Thujon oder β-Thujon, Tetranortriterpene (Limonoide) wie Desoxylimonen, Desoxylimonensäure, Limonin, Ichangin, Iso-Obacunonsäure, Obacunon, Obacunonsäure, Nomilin oder Nomilinsäure, Terpene wie Marrubin, Prämarrubin, Carnosol, Carnosolsäure oder Quassin.

Alkaloide bezeichnen natürlich vorkommende, chemisch heterogene, meist alkalische, stickstoffhaltige organische Verbindungen des Sekundärstoffwechsels, die auf den tierischen oder menschlichen Organismus wirken.

Geeignete Alkaloide sind beispielsweise Chininhydrochlorid, Chininhydrogensulfat, Chinindihydrochlorid, Chininsulfat, Columbin und Coffein.

Geeignete Aminosäuren umfassen beispielsweise Threonin, Methionin, Phenylalanin, Tryptophan, Arginin, Histidin, Valin und Asparaginsäure.

Besonders bevorzugte Bitterstoffe sind Chininsulfat (Bitterwert = 10.000), Naringin (Bitterwert = 10.000), Saccharoseoctaacetat (Bitterwert = 100.000), Chininhydrochlorid, Denatoniumbenzoat (Bitterwert > 100.000.000) und Mischungen daraus, ganz besonders bevorzugt Denatoniumbenzoat (z.B. erhältlich als Bitrex^{®}).

Das wasserlösliche Material enthält bezogen auf dessen Gesamtgewicht bevorzugt Bittermittel (besonders bevorzugt Denatonium Benzoat) in einer Gesamtmenge von höchstens 1 Gewichtsteil Bitterstoff zu 250 Gewichtsteilen viskoelastischer, festförmiger Zusammensetzung (1 : 250), besonders bevorzugt von höchstens 1 : 500, ganz besonders bevorzugt von höchstens 1 : 1000.

Es ist bevorzugt, das erfindungsgemäße Mehrkomponenten-Waschmittel zum Waschen von Textilien, insbesondere zum Entfernen von bleichbaren Anschmutzungen, ganz besonders bevorzugt zur Entfernung von Anschmutzungen, die auf Bestandteilen und Rückständen von Deodorantien, Rost, Beeren, Tee und Rotwein basieren, zu verwenden.

Es kann, wie bereits erwähnt, die Anschmutzung mit der erfindungsgemäßen Zusammensetzung dem eigentlichen Waschverfahren vorbehandelt werden und/oder zunächst eine tensidhaltige Flotte als Waschlösung bereitgestellt wird, die das erfindungsgemäße Mehrkomponenten-Waschmittel enthält und die anschließend mit dem zu reinigendem Textil in Kontakt gebracht wird.

Verfahren zur Reinigung von Textilien zeichnen sich im allgemeinen dadurch aus, dass in mehreren Verfahrensschritten verschiedene reinigungsaktive Substanzen auf das Reinigungsgut aufgebracht und nach der Einwirkzeit abgewaschen werden, oder dass das Reinigungsgut in sonstiger Weise mit einem Waschmittel oder einer Lösung der Zusammensetzung behandelt wird.

Ein weiterer Gegenstand der Erfindung ist deshalb ein Verfahren zum Waschen von Textilien, umfassend die Schritte,
Zugeben eines erfindungsgemäßen Mehrkomponenten-Waschmittels zu einem Gewebe oder Textil; und
Durchführen einer Waschprozedur, bevorzugt in einer Waschmaschine.

Bevorzugt ist ein Verfahren zur Textilbehandlung umfassend die Verfahrensschritte
(a) Bereitstellen einer wässrigen Flotte durch Mischen von 0,5 Liter bis 40,0 Liter Wasser mit 0,5 bis 100 g eines erfindungsgemäßen Mehrkomponenten-Waschmittels, und
(b) In Kontakt bringen eines Textils mit der gemäß (a) hergestellten wässrigen Flotte.

Es ist bevorzugt, wenn im Schritt (b) das Textil 10 bis 240 Minuten, insbesondere 20 bis 180 Minuten mit der gemäß (a) hergestellten, wässrigen Flotte in Kontakt steht.

Ferner ist es bevorzugt, wenn das Textil nach Schritt (b) gespült und getrocknet wird.

Es ist insbesondere bevorzugt, das Verfahren in einer automatischen Waschmaschine durchzuführen. Dabei wird vor dem Schritt (a) das Textil in die Trommel der Waschmaschine gegeben. Ein erfindungsgemäßes Mehrkomponenten-Waschmittel wird in die Einspülkammer der Waschmaschine gefüllt oder gemeinsam mit den Textilien in die Trommel der Waschmaschine gegeben. Dabei ist es bevorzugt, das erfindungsgemäße Mehrkomponenten-Waschmittel gemeinsam mit den Textilien in die Trommel der Waschmaschine zu geben.

Danach werden 0,5 bis 40 Liter Wasser zugefügt und gemischt. Bemerkenswerterweise wird jeweils das Textil nicht durch die erfindungsgemäße Catechol-Metallkomplexverbindung angefärbt. Dies gilt selbst dann, wenn das erfindungsgemäße Waschmittel bzw. Mehrkomponenten-Waschmittel in die Trommel der Waschmaschine dosiert wird und direkt mit dem Textil in Kontakt tritt.

Es ist erfindungsgemäß bevorzugt, wenn zur Herstellung der besagten Lösung 10 bis 110 g, insbesondere 15 bis 100 g des erfindungsgemäßen Mehrkomponenten-Waschmittels mit 5 bis 25 I Wasser, insbesondere mit 10 bis 20 I Wasser, vermischt werden.

In den beschriebenen Verfahren werden in verschiedenen Ausführungsformen der Erfindung Temperaturen von 60°C oder weniger, beispielsweise 50°C oder weniger, eingesetzt. Diese Temperaturangaben beziehen sich auf die im Schritt (b) eingesetzten Temperaturen.

Es kann, wie bereits erwähnt, die Anschmutzung mit dem erfindungsgemäße Mehrkomponenten-Waschmittel dem eigentlichen Waschverfahren vorbehandelt werden und/oder zunächst eine tensidhaltige Flotte als Waschlösung bereitgestellt wird, die das erfindungsgemäße Mehrkomponenten-Waschmittel enthält und die anschließend mit dem zu reinigenden Textil in Kontakt gebracht wird.

Alle hierin im Zusammenhang mit dem Mehrkomponenten-Waschmitteln der Erfindung beschriebenen Ausführungsformen, insbesondere im Hinblick auf die Spezifikation der Inhaltsstoffe, sind gleichermaßen auf die beschriebenen Verfahren und Verwendungen anwendbar und umgekehrt.

### Beispiele

### 1.0 Herstellung und Isolierung der farbigen Komplexe mit N,N'-Dipropyl-2,3-dihydroxyterephthaldiamid (Ligand L)

0,3 mmol N,N'-Dipropyl-2,3-dihydroxyterephthaldiamid (Ligand L) wurden in 10 mL Methanol gelöst. Dazu wurden unter Rühren 0,3 mmol KOH (als 0,5M Lösung in Methanol) gegeben. 0,1 mmol des Metall(III)chlorids bzw. 0,15 mmol des Metall(II)chlorids wurden in 4 mL Methanol gelöst. Diese Lösung wurde anschließend zur ersten Lösung zugegeben. Nach Ablauf einer Rührzeit von einer Stunde, wurde die resultierende Lösung auf 4 mL eingeengt und anschließend 50 mL Diethylether hinzugegeben. Der ausgefällte Metallkomplex wurde durch Filtration isoliert.

Auf diese Weise wurden farbige Pulver der folgenden Metallkomplexe Fe(III)L₃ (rot), Ce(III)L₃ (violett) und Mn(II)L₂ (grün), hergestellt.

Aus einer Spatelspitze eines Farbstoffes wurden unter pH-Wert Einstellung mit NaOH jeweils eine Lösung pro Farbstoff und pH-Wert bei pH 8, pH 9,5 und pH 10 hergestellt. Eine Anhebung des pH Wertes der jeweiligen Lösungen führte zu keiner sichtbaren Farbänderung.

Von den Komplexen Fe(III)L₃ (rot), Ce(III)L₃ (violett) und Mn(II)L₂ (grün) wurden UV/VIS-Spektren in wässriger Lösung bei pH 8 (NaOH) und 20°C aufgenommen.

**Tabelle 1: Maxima im UV/VIS-Spektrum bei einer Wellenlänge zwischen 400 und 800 nm**

| Catechol-Metallkomplex | Maximum (Wellenlänge in nm) |
|---|---|
| Fe(III)L₃ | 444 (Schulter 495) |
| Ce(III)L₃ | 531 |
| Mn(II)L₂ | 626 |

### 2.0 Herstellung erfindungsgemäßer Mehrkomponenten-Waschmittel

Für die Herstellung eines Mehrkomponenten-Waschmittels in einem 2-Kammer-Pouch wurde als Komponente K1 zunächst folgende erfindungsgemäße erste flüssige Zusammensetzungen FZ1 gemäß Tabelle 2 unter Rühren hergestellt.

**Tabelle 2: erste flüssige Zusammensetzung als Komponente K1**

| | FZ1 [Gew.-%] |
|---|---|
| N,N'-Dipropyl-2,3-dihydroxyterephthaldiamid | 10,0 |
| an 2-Position verzweigter C₁₃₋₁₅-Alkylalkohol ethoxyliert mit 8 Mol Ethylenoxid | 70,0 |
| Fe(III)L₃ | 0,005 |
| Ethanol | ad 100 |

Es wurde ebenso als Komponente K2 folgende erfindungsgemäße zweite flüssige Zusammensetzung FZ2 gemäß Tabelle 3 unter Rühren hergestellt.

**Tabelle 3: zweite flüssige Zusammensetzung als Komponente K2**

| | FZ2 [Gew.-%] |
|---|---|
| C₁₁₋₁₃-Alkylbenzolsulfonsäure | 22,0 |
| an 2-Position verzweigter C₁₃₋₁₅-Alkylalkohol ethoxyliert mit 8 Mol Ethylenoxid | 24,0 |
| Glyzerin | 10,5 |
| 2-Aminoethanol | 6,0 |
| ethoxyliertes Polyethylenimin | 6,0 |
| C₁₂₋₁₈-Fettsäure | 7,5 |
| Diethylentriamin-N,N,N',N',N"-penta(methylenphosphonsäure), Heptanatrium-Salz | 0,7 |
| 1,2-Propylenglykol | 8,2 |
| Ethanol | 3,0 |
| Natriumbisulfit | 0,1 |
| Denatoniumbenzoat | 0,001 |
| Soil-Release Polymer aus Ethylenterephthalat und Polyethylenoxid-terephthalat | 1,4 |
| Optischer Aufheller | 0,6 |
| Parfüm | 1,7 |
| Protease, Amylase, Lipase, Cellulase | 0,8 |
| blauer Farbstoff (keine erfindungsgemäße Catechol-Verbindung der Formel (I) | 0,005 |
| Wasser | ad 100 |

Zur Umhüllung der Komponenten mit wasserlöslichem Material wurde eine Denatoniumbenzoathaltige, Polyvinylalkohol-basierte Folie M8630 der Fa. Monosol (88 µm) auf eine heizbare Form mit Doppelkavität aufgespannt. Die aufgespannte Folie wurde für eine Dauer von 2400 ms bei 105°C erhitzt und dann durch ein Vakuum in die Kavität gezogen. Im Anschluss wurden 8,4 g der ersten flüssigen Zusammensetzung der Tabelle 2 mittels einer Spritze in die erste Kavität gefüllt und danach 16,6 g der flüssigen Zusammensetzung FZ2 der Tabelle 3 mittels einer Spritze in die zweite Kavität gegeben. Danach wurde eine Oberfolie (M8630, 90 µm) zum Verschließen der Kavitäten aufgelegt und mittels Hitze (150°C, 1000 ms) mit der ersten Folie verschweißt. Nach dem Brechen des Vakuums wurde die erhaltene Portion der Kavität entnommen.

Die auf diese Weise erhaltenen erfindungsgemäßen Mehrkomponenten-Waschmittel wurden

### 3.0 Waschversuche

Weiterhin wurden mit den Waschmitteln F1 und F3 der Tabelle 2 jeweils Waschversuche nach den folgenden Testbedingungen durchgeführt.

Weiße Gewebe (WFK 10A, WFK 20A und WFK 30A) wurden in einer Miele Waschmachine Typ 318 bei 16°d und 40°C im Kurzprogramm zweimal in Folge mit 35 g des Pulverwaschmittels des Handelsproduktes "Weißer Riese Universal" gewaschen. Anschließend wurde ein Waschgang ohne Waschmittel durchgeführt. Gewebe WFK 10 A wird von "wfk Testgewebe GmbH" als "Standard Cotton" (Standard Baumwolle), WFK 20A als "Polyester/Cotton (65 %/35 %)" (Polyester/Baumwolle 65 %/35%) und WFK 30A als "Polyester" bezeichnet.

Das erfindungsgemäße Mehrkomponenten-Waschmittel wurde in die Trommel einer Miele Waschmachine Typ 318 gegeben. Anschließend wurden die wie zuvor beschriebenen, vorgewaschenen, weißen Gewebe (WFK 10A, WFK 20A und WFK 30A) neben 23 weißen Handtüchern, 5 weißen Frotteetüchern und 6 weißen T-Shirts (Waschladung insgesamt 3 kg) in die Trommel gegeben und bei 16°d und 40°C im Hauptwaschgang 60 Minuten lang gewaschen, anschließend gespült und hängend getrocknet. Diese Prozedur wurde 3 Mal hintereinander durchgeführt.

Die weißen Gewebe wiesen nach dem Waschprozedere keine Verfärbungen sowie keine fleckigen Einfärbungen auf. Das beweist, dass der erfindungsgemäß eingesetzte Catechol-Metallkomplex auch bei wiederholtem Waschvorgang nicht das Textil anfärbt.

## Patentansprüche

1. Mehrkomponenten-Waschmittel umfassend mindestens zwei Komponenten, welches in einem Behälter mit mindestens zwei Kammern enthalten ist, wobei
eine erste Komponente K1 eine erste flüssige Zusammensetzung ist, enthaltend
• mindestens eine Catechol-Metallkomplexverbindung der Formel (I) 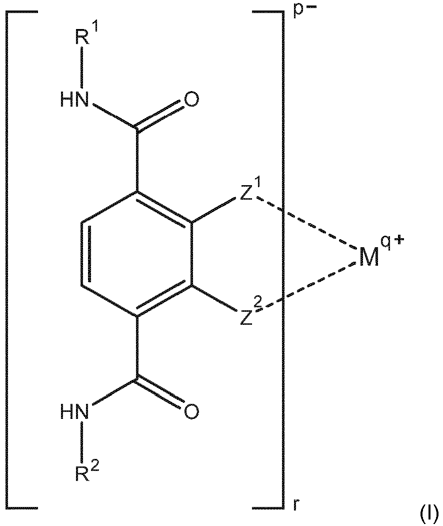 wobei
R¹ und R² unabhängig voneinander für einen Kohlenwasserstoffrest mit 1 bis 20 Kohlenstoffatomen stehen, der gegebenenfalls mit mindestens einem Rest substituiert ist, ausgewählt aus Hydroxy, (C₁-C₄)-Alkoxy, (C₁-C₄)-Alkoxy(CH₂CH₂O)ₙ-, -NR'R" oder -N⁺R'R'R‴X⁻, wobei n = 1 bis 10, R', R" und R‴ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen,
Z¹ und Z² unabhängig voneinander für OH oder O⁻ stehen,
M steht für ein Metallkation eines Übergangsmetalls oder Lanthanoids, (insbesondere für ein Metallkation aus Ti, Zr, Hf, V, Nb, Ta, Cr. Mo, W, Mn, Fe, Ru, Co, Ni, Cu, Zn, Ce oder Sm),
q als Ladungszahl des Metallkations M für eine Zahl 2, 3 oder 4 steht,
p als Ladungszahl des Catecholliganden für eine Zahl 0, 1 oder 2 steht,
r für eine Zahl 1, 2, 3 oder 4 steht, und
• mindestens eine freie Catecholverbindung der Formel (II) oder deren Salz 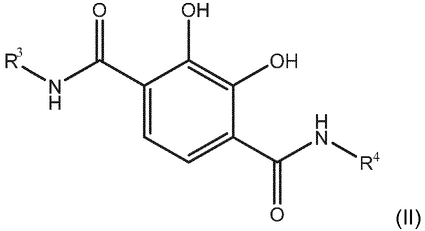 wobei
R³ und R⁴ unabhängig voneinander für einen Kohlenwasserstoffrest mit 1 bis 20 Kohlenstoffatomen stehen, der gegebenenfalls mit mindestens einem Rest substituiert ist, ausgewählt aus Hydroxy, (C₁-C₄)-Alkoxy, (C₁-C₄)-Alkoxy(CH₂CH₂O)ₙ-, -NR'R" oder -N⁺R'R"R‴X⁻, wobei n = 1 bis 10, R', R" und R‴ unabhängig voneinander für H oder einen linearen oder verzweigten aliphatischen Kohlenwasserstoffrest mit 1 bis 3, vorzugsweise 1 bis 2 Kohlenstoffatomen und X⁻ für ein Anion stehen,
mit der Maßgabe, dass die Catecholverbindung der Formel (II) und deren Salz von Verbindungen der Formel (I) verschieden sind,
und eine zweite Komponente K2 eine zweite flüssige Zusammensetzung ist, enthaltend mindestens ein Tensid.

2. Mehrkomponenten-Waschmittel nach Anspruch 1, **dadurch gekennzeichnet, dass** in Formel (I) die Reste R¹ und R² unabhängig voneinander für eine Alkylgruppe, eine Alkoxyalkylgruppe, eine Hydroxyalkylgruppe, eine Hydroxyalkyloxyalkyl-Gruppe, (N-Hydroxyethyl)-aminoethyl, (N-Methoxyethyl)-aminoethyl oder (N-Ethoxyethyl)-aminoethyl, oder eine aromatische Gruppe stehen (bevorzugt für Methyl, ethyl, n-Propyl, Isopropyl, n-Butyl, sec-Butyl, tert-Butyl, iso-Butyl, n-pentyl, iso-Pentyl, Neopentyl, Hexyl, 2-Hydroxyethyl, 2-Hydroxypropyl, 3-Hydroxypropyl, 2-Methoxyethyl, 2-Ethoxyethyl, 3-Methoxypropyl, 3-Ethoxypropyl, (N-Hydroxyethyl)-aminoethyl, (N-Methoxyethyl)-aminoethyl oder (N-Ethoxyethyl)-aminoethyl oder Phenyl).

3. Mehrkomponenten-Waschmittel nach einem der Ansprüche 1 oder 2, **dadurch gekennzeichnet, dass** in Formel (I) die Reste R¹ und R² gleich sind.

4. Mehrkomponenten-Waschmittel nach einem der Ansprüche 1 bis 3, **dadurch gekennzeichnet, dass** in Formel (I) M ausgewählt ist aus Fe, Mn, Cr, Ni, Co, Ce, Cu oder Hydraten dieser Metallionen.

5. Mehrkomponenten-Waschmittel nach einem der Ansprüche 1 bis 4, **dadurch gekennzeichnet, dass** Catechol-Metallkomplexverbindung der Formel (I) Licht in einer Wellenlänge von 400 bis 800 nm absorbiert, gemessen mittels Zweistrahl-Spektralphotometer bei einer Konzentration des Komplexes von 10⁻⁵ mol/L in Wasser bei 20°C, einem pH-Wert von 8 und einer Schichtdicke von 1 cm.

6. Mehrkomponenten-Waschmittel nach einem der Ansprüche 1 bis 5, **dadurch gekennzeichnet, dass** bezogen auf das Gesamtgewicht der ersten flüssigen Zusammensetzung die Catechol-Metallkomplexverbindung der Formel (I) in Komponente K1 in 0,001 bis 10,0 Gew.%, bevorzugt 0,01 bis 3,0 Gew.% enthalten ist.

7. Mehrkomponenten-Waschmittel nach einem der Ansprüche 1 bis 6, **dadurch gekennzeichnet, dass** bezogen auf das Gesamtgewicht der ersten flüssigen Zusammensetzung die freie Catechol-Verbindung der Formel (II) in Komponente K1 in einer Gesamtmenge von 0,5 bis 50 Gew.%, bevorzugt von 3 bis 30 Gew.-%, besonders bevorzugt von 5 bis 20 Gew.%, enthalten ist.

8. Mehrkomponenten-Waschmittel nach einem der Ansprüche 1 bis 7, wobei die erste flüssige Zusammensetzung der Komponente K1 mindestens ein organisches Lösemittel enthält.

9. Mehrkomponenten-Waschmittel nach einem der Ansprüche 1 bis 8, **dadurch gekennzeichnet, dass** die erste flüssige Zusammensetzung der Komponente K1 mindestens ein Tensid, insbesondere mindestens ein nichtionisches Tensid, enthält.

10. Mehrkomponenten-Waschmittel nach einem der Ansprüche 1 bis 9, **dadurch gekennzeichnet, dass** die zweite Komponente und gegebenenfalls vorhandene zusätzliche Komponenten des Mehrkomponenten-Waschmittels im Wesentlichen frei sind von Verbindungen der Formel (I) und Verbindungen der Formel (II).

11. Mehrkomponenten-Waschmittel nach einem der Ansprüche 1 bis 10, **dadurch gekennzeichnet, dass** bezogen auf das Gesamtgewicht des Mehrkomponenten-Waschmittels die freie Catecholverbindung der Formel (II) in einer Gesamtmenge von 0,1 bis 10,0 Gew.-%, insbesondere von 0,3 bis 3,0 Gew.-%, enthalten ist.

12. Mehrkomponenten-Waschmittel nach einem der Ansprüche 1 bis 11, **dadurch gekennzeichnet, dass** mindestens eine weitere Komponente enthalten ist, wobei die weiteren Komponenten jeweils definiert sind wie Komponente K2 oder eine pulverförmige Zusammensetzung oder ein Granulat sind.

13. Mehrkomponenten-Waschmittel nach einem der Ansprüche 1 bis 12, **dadurch gekennzeichnet, dass** es in einem Behälter aus wasserlöslichem Material, insbesondere aus einer wasserlöslichen Folie, mit mindestens zwei voneinander getrennten Kammern konfektioniert ist, wobei sich in wenigstens einer Kammer Komponente K1 und in wenigstens einer hiervon verschiedenen Kammer die Komponente K2 befinden.

14. Mehrkomponenten-Waschmittel nach einem der Ansprüche 1 bis 13, **dadurch gekennzeichnet, dass** das Mehrkomponenten-Waschmittel ein Bittermittel enthält, bevorzugt ist das Bittermittel in Komponente K1 und/oder K2 und/oder im wasserlöslichen Material des Behälters des Mehrkomponenten-Waschmittels enthalten, insbesondere in der wasserlöslichen Folie.

15. Mehrkomponenten-Waschmittel nach einem der Ansprüche 1 bis 14, **dadurch gekennzeichnet, dass** die flüssige Zusammensetzung einer Komponente des Mehrkomponenten-Waschmittels (insbesondere der Komponente K1 und der Komponente K2) Wasser, insbesondere bezogen auf das Gesamtgewicht der besagten flüssigen Zusammensetzung in einer Menge zwischen 0 und 25 Gew.-%, enthält.

16. Verfahren zum Waschen von Textilien, umfassend die Schritte,
Zugeben eines Mehrkomponenten-Waschmittels nach einem der Ansprüche 1 bis 15 zu einem Gewebe oder Textil; und
durchführen einer Waschprozedur, bevorzugt in einer Waschmaschine.

## Claims

1. A multi-component detergent, comprising at least two components, that is contained in a container having at least two chambers, wherein
a first component K1 is a first liquid composition, containing
• at least one catechol metal complex compound of formula (I) 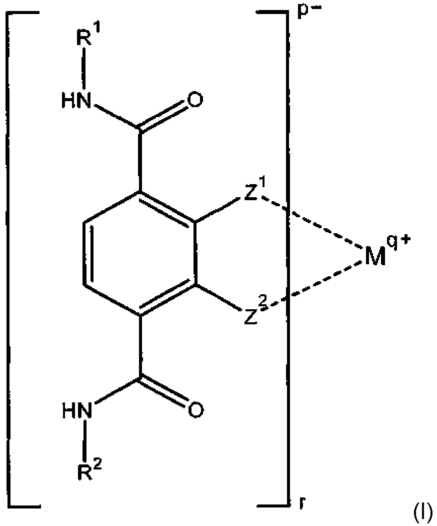 where
R¹ and R² represent, independently of one another, a hydrocarbon functional group having 1 to 20 carbon atoms that is optionally substituted by at least one functional group selected from hydroxy, (C₁-C₄)-alkoxy, (C₁-C₄)-alkoxy(CH₂CH₂O)ₙ-, -NR'R"' or -N⁺R'R"R‴ X⁻, where n = 1 to 10, R', R" and R'" represent, independently of one another, H or a linear or branched aliphatic hydrocarbon functional group having 1 to 3, preferably 1 to 2, carbon atoms and X⁻ represents an anion,
Z¹ and Z² represent, independently of one another, OH or O⁻,
M represents a metal cation of a transition metal or lanthanide, (in particular a metal cation from Ti, Zr, Hf, V, Nb, Ta, Cr, Mo, W, Mn, Fe, Ru, Co, Ni, Cu, Zn, Ce or Sm), q represents, as a charge number of the metal cation M, the number 2, 3 or 4, p represents, as a charge number of the catechol ligand, the number 0, 1 or 2, r represents the number 1, 2, 3 or 4, and
• at least one free catechol compound of formula (II) or the salt thereof 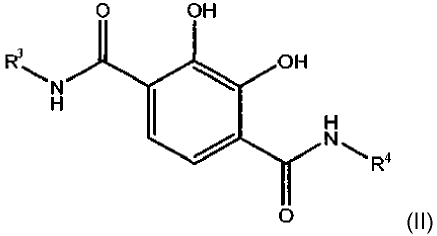 where
R³ and R⁴ represent, independently of one another, a hydrocarbon functional group having 1 to 20 carbon atoms that is optionally substituted by at least one functional group selected from hydroxy, (C₁-C₄)-alkoxy, (C₁-C₄)-alkoxy(CH₂CH₂O)ₙ-, -NR'R" or -N⁺R'R"R‴ X⁻, where n = 1 to 10, R', R" and R'" represent, independently of one another, H or a linear or branched aliphatic hydrocarbon functional group having 1 to 3, preferably 1 to 2, carbon atoms and X⁻ represents an anion,
with the proviso that the catechol compound of formula (II) and the salt thereof are different from the compounds of formula (I),
and a second component K2 is a second liquid composition, containing at least one surfactant.

2. The multi-component detergent according to claim 1, **characterized in that** in formula (I), the functional groups R¹ and R² represent, independently of one another, an alkyl group, an alkoxyalkyl group, a hydroxyalkyl group, a hydroxyalkyloxyalkyl group, (N-hydroxyethyl)-aminoethyl, (N-methoxyethyl)-aminoethyl or (N-ethoxyethyl)-aminoethyl, or an aromatic group (preferably methyl, ethyl, n-propyl, isopropyl, n-butyl, sec-butyl, tert-butyl, iso-butyl, n-pentyl, iso-pentyl, neopentyl, hexyl, 2-hydroxyethyl, 2-hydroxypropyl, 3-hydroxypropyl, 2-methoxyethyl, 2-ethoxyethyl, 3-methoxypropyl, 3-ethoxypropyl, (N-hydroxyethyl)-aminoethyl, (N-methoxyethyl)-aminoethyl or (N-ethoxyethyl)-aminoethyl or phenyl).

3. The multi-component detergent according to one of claims 1 or 2, **characterized in that** in formula (I), the functional groups R¹ and R² are identical.

4. The multi-component detergent according to one of claims 1 to 3, **characterized in that** in formula (I), M is selected from Fe, Mn, Cr, Ni, Co, Ce, Cu or hydrates of these metal ions.

5. The multi-component detergent according to one of claims 1 to 4, **characterized in that** the catechol metal complex compound of formula (I) absorbs light in a wavelength of 400 to 800 nm, measured by means of a two-beam spectrophotometer at a concentration of the complex of 10⁻⁵ mol/L in water at 20 °C, a pH of 8 and a layer thickness of 1 cm.

6. The multi-component detergent according to one of claims 1 to 5, **characterized in that** the catechol metal complex compound of formula (I) is contained in component K1 in 0.001 to 10.0 wt.%, preferably 0.01 to 3.0 wt.%, based on the total weight of the first liquid composition.

7. The multi-component detergent according to one of claims 1 to 6, **characterized in that** the free catechol compound of formula (II) is contained in component K1 in a total amount of from 0.5 to 50 wt.%, preferably from 3 to 30 wt.%, particularly preferably from 5 to 20 wt.%, based on the total weight of the first liquid composition.

8. The multi-component detergent according to one of claims 1 to 7, wherein the first liquid composition of the component K1 contains at least one organic solvent.

9. The multi-component detergent according to one of claims 1 to 8, **characterized in that** the first liquid composition of the component K1 contains at least one surfactant, in particular at least one non-ionic surfactant.

10. The multi-component detergent according to one of claims 1 to 9, **characterized in that** the second component and optionally present additional components of the multi-component detergent are substantially free of compounds of formula (I) and compounds of formula (II).

11. The multi-component detergent according to one of claims 1 to 10, **characterized in that** the free catechol compound of formula (II) is contained in a total amount of from 0.1 to 10.0 wt.%, in particular from 0.3 to 3.0 wt.%, based on the total weight of the multi-component detergent.

12. The multi-component detergent according to one of claims 1 to 11, **characterized in that** at least one further component is contained, the further components each being defined as component K2 or a powdery composition or a granulate.

13. The multi-component detergent according to one of claims 1 to 12, **characterized in that** said detergent is packaged in a container made of water-soluble material, in particular of a water-soluble film, having at least two separate chambers, component K1 being located in at least one chamber and component K2 being located in at least one different chamber.

14. The multi-component detergent according to one of claims 1 to 13, **characterized in that** the multi-component detergent contains a bittering agent, preferably the bittering agent being contained in component K1 and/or K2 and/or in the water-soluble material of the container of the multi-component detergent, in particular in the water-soluble film.

15. The multi-component detergent according to one of claims 1 to 14, **characterized in that** the liquid composition of a component of the multi-component detergent (in particular of the component K1 and the component K2) contains water, in particular in an amount of between 0 and 25 wt.%, based on the total weight of said liquid composition.

16. A method for washing textiles, comprising the steps of:
adding a multi-component detergent according to one of claims 1 to 15 to a fabric or textile; and
carrying out a washing procedure, preferably in a washing machine.

## Revendications

1. Agent de lavage à plusieurs composants comprenant au moins deux composants, lequel est contenu dans un récipient comportant au moins deux chambres, dans lequel
un premier composant K1 est une première composition liquide contenant
• au moins un composé complexe métallique-catéchine de formule (I) 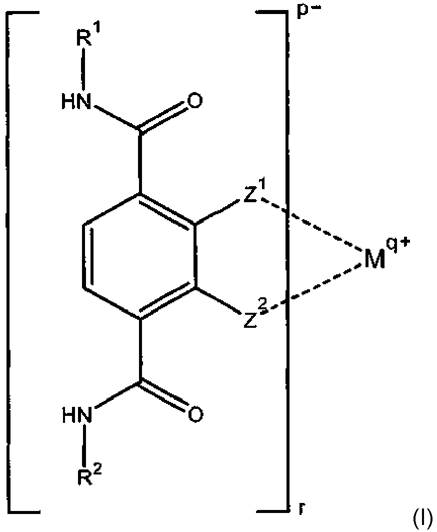 où
R¹ et R² représentent indépendamment l'un de l'autre un radical hydrocarboné comportant 1 à 20 atomes de carbone éventuellement substitué par au moins un radical, choisi parmi un hydroxy, un alcoxy en (C₁-C₄), un alcoxy (CH₂CH₂O)ₙ- en (C₁-C₄), -NR'R" ou -N⁺R'R"R‴ X⁻, où n = 1 à 10, R', R" et R'" représentent indépendamment les uns des autres H ou un radical hydrocarboné aliphatique linéaire ou ramifié comportant 1 à 3, de préférence 1 à 2 atomes de carbone et X⁻ représente un anion,
Z¹ et Z² représentent indépendamment l'un de l'autre OH ou O⁻,
M représente un cation métallique d'un métal de transition ou d'un lanthanide (en particulier un cation métallique de Ti, Zr, Hf, V, Nb, Ta, Cr, Mo, W, Mn, Fe, Ru, Co, Ni, Cu, Zn, Ce ou Sm),
q, en tant que nombre de charge du cation métallique M, représente un nombre 2, 3 ou 4,
p, en tant que nombre de charge du ligand catéchine, représente un nombre 0, 1 ou 2,
r représente un nombre 1, 2, 3 ou 4, et
• au moins un composé catéchine libre de formule (II) ou son sel 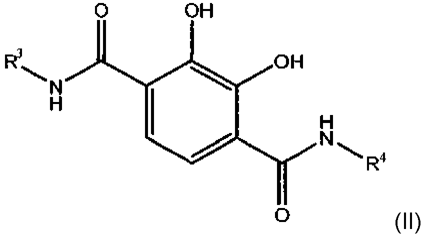 où
R³ et R⁴ représentent indépendamment l'un de l'autre un radical hydrocarboné comportant 1 à 20 atomes de carbone éventuellement substitué par au moins un radical, choisi parmi un hydroxy, un alcoxy en (C₁-C₄), un alcoxy (CH₂CH₂O)ₙ- en (C₁-C₄), -NR'R" ou
-N⁺R'R"R‴ X⁻, où n = 1 à 10, R', R" et R'" représentent indépendamment les uns des autres H ou un radical hydrocarboné aliphatique linéaire ou ramifié comportant 1 à 3, de préférence 1 à 2 atomes de carbone et X⁻ représente un anion,
à condition que le composé catéchine de formule (II) et son sel soient différents de composés de formule (I),
et un second composant K2 est une seconde composition liquide contenant au moins un tensioactif.

2. Agent de lavage à plusieurs composants selon la revendication 1, **caractérisé en ce que** dans la formule (I), les radicaux R¹ et R² représentent indépendamment l'un de l'autre un groupe alkyle, un groupe alcoxyalkyle, un groupe hydroxyalkyle, un groupe hydroxyalkyloxyalkyle, (N-hydroxyéthyl)-aminoéthyle, (N-méthoxyéthyl)-aminoéthyle ou (N-éthoxyéthyl)-aminoéthyle, ou un groupe aromatique (de préférence le méthyle, l'éthyle, le n-propyle, l'isopropyle, le n-butyle, le sec-butyle, le tert-butyle, l'iso-butyle, le n-pentyle, l'isopentyle, le néopentyle, l'hexyle, le 2-hydroxyéthyle, le 2-hydroxypropyle, le 3-hydroxypropyle, le 2-méthoxyéthyle, le 2-éthoxyéthyle, le 3-méthoxypropyle, le 3-éthoxypropyle, le (N-hydroxyéthyl)-aminoéthyle, le (N-méthoxyéthyl)-aminoéthyle ou le (N-éthoxyéthyl)-aminoéthyle ou le phényle).

3. Agent de lavage à plusieurs composants selon l'une des revendications 1 ou 2, **caractérisé en ce que** dans la formule (I), les radicaux R¹ et R² sont identiques.

4. Agent de lavage à plusieurs composants selon l'une des revendications 1 à 3, **caractérisé en ce que** dans la formule (I), M est choisi parmi Fe, Mn, Cr, Ni, Co, Ce, Cu ou des hydrates desdits ions métalliques.

5. Agent de lavage à plusieurs composants selon l'une des revendications 1 à 4, **caractérisé en ce que** le composé complexe métallique-catéchine de formule (I) absorbe la lumière à une longueur d'onde comprise entre 400 et 800 nm, mesurée à l'aide d'un spectrophotomètre à deux faisceaux à une concentration du complexe de 10⁻⁵ mol/L dans de l'eau à 20 °C, un pH de 8 et une épaisseur de couche de 1 cm.

6. Agent de lavage à plusieurs composants selon l'une des revendications 1 à 5, **caractérisé en ce que**, par rapport au poids total de la première composition liquide, le composé complexe métallique-catéchine de formule (I) est contenu dans le composant K1 à raison de 0,001 à 10,0 % en poids, de préférence de 0,01 à 3,0 % en poids.

7. Agent de lavage à plusieurs composants selon l'une des revendications 1 à 6, **caractérisé en ce que**, par rapport au poids total de la première composition liquide, le composé catéchine libre de formule (II) est contenu dans le composant K1 en une quantité totale de 0,5 à 50 % en poids, de préférence de 3 à 30 % en poids, de manière particulièrement préférée de 5 à 20 % en poids.

8. Agent de lavage à plusieurs composants selon l'une des revendications 1 à 7, dans lequel la première composition liquide du composant K1 contient au moins un solvant organique.

9. Agent de lavage à plusieurs composants selon l'une des revendications 1 à 8, **caractérisé en ce que** la première composition liquide du composant K1 contient au moins un tensioactif, en particulier au moins un tensioactif non ionique.

10. Agent de lavage à plusieurs composants selon l'une des revendications 1 à 9, **caractérisé en ce que** le second composant et éventuellement des composants supplémentaires présents de l'agent de lavage à plusieurs composants sont sensiblement exempts de composés de formule (I) et de composés de formule (II).

11. Agent de lavage à plusieurs composants selon l'une des revendications 1 à 10, **caractérisé en ce que**, par rapport au poids total de l'agent de lavage à plusieurs composants, le composé catéchine libre de formule (II) est contenu en une quantité totale de 0,1 à 10,0 % en poids, en particulier de 0,3 à 3,0 % en poids.

12. Agent de lavage à plusieurs composants selon l'une des revendications 1 à 11, **caractérisé en ce qu'**au moins un autre composant est contenu, les autres composants étant respectivement définis comme le composant K2 ou étant une composition pulvérulente ou des granulés.

13. Agent de lavage à plusieurs composants selon l'une des revendications 1 à 12, **caractérisé en ce qu'**il est conditionné dans un récipient en matériau hydrosoluble, en particulier en film hydrosoluble, comportant au moins deux chambres séparées l'une de l'autre, le composant K1 se trouvant dans au moins une chambre et le composant K2 se trouvant dans au moins une chambre différente de la précédente.

14. Agent de lavage à plusieurs composants selon l'une des revendications 1 à 13, **caractérisé en ce que** l'agent de lavage à plusieurs composants contient un agent amérisant, de préférence l'agent amérisant est contenu dans les composants K1 et/ou K2 et/ou dans le matériau hydrosoluble du récipient de l'agent de lavage à plusieurs composants, en particulier dans le film hydrosoluble.

15. Agent de lavage à plusieurs composants selon l'une des revendications 1 à 14, **caractérisé en ce que** la composition liquide d'un composant de l'agent de lavage à plusieurs composants (en particulier le composant K1 et le composant K2) contient de l'eau, en particulier en une quantité comprise entre 0 et 25 % en poids par rapport au poids total de ladite composition liquide.

16. Procédé destiné au lavage de textiles, comprenant les étapes,
d'ajout d'un agent de lavage à plusieurs composants selon l'une des revendications 1 à 15 à un tissu ou textile ; et
d'exécution d'une procédure de lavage, de préférence dans un lave-linge.
